# EUROPÄISCHE PATENTSCHRIFT

(11) **EP 1 395 459 B1**
(45) Veröffentlichungstag und Bekanntmachung des Hinweises auf die Patenterteilung: **11.02.2009**
(21) Anmeldenummer: 02740375.7
(22) Anmeldetag: 22.05.2002
(51) Int. Cl.: B60N 2/12

(54) **KRAFTFAHRZEUGSITZ**
MOTOR VEHICLE SEAT
SIEGE DE VEHICULE AUTOMOBILE

(30) Priorität: 25.05.2001 DE 10127151; 25.05.2001 DE 10127152
(43) Veröffentlichungstag der Anmeldung: 10.03.2004
(73) Patentinhaber: Brose Fahrzeugteile GmbH & Co. KG, Coburg, 96450 Coburg (DE)
(72) Erfinder: RAUSCH, Peter, 96489 Niederfüllbach (DE); SCHWERDTNER, Christina, 96465 Neustadt (DE); SUCK, Wolfgang, 96450 Coburg (DE); BAUERSACHS, Andrea, 96237 Ebersdorf (DE); ESCHER, Reinhard, 96486 Lautertal (DE); TAUBMANN, Werner, 96486 Lautertal (DE)
(74) Vertreter: Baumgärtel, Gunnar
(86) Internationale Anmeldenummer: PCT/DE2002/001908
(87) Internationale Veröffentlichungsnummer: WO 2002/094604

(56) Entgegenhaltungen:
- WO-A-00/55002
- FR-A- 2 756 522
- US-B1- 6 227 596

## Beschreibung

Die Erfindung betrifft einen Kraftfahrzeugsitz nach dem Oberbegriff des Patentanspruchs 1.

Dieser umfasst beispielsweise ein Sitzgestell, eine auf dem Sitzgestell vorgesehen Sitzfläche und eine Rückenlehne, die schwenkbar an dem Sitzgestell gelagert ist und die in Richtung auf die Sitzfläche vorklappbar ist.

Derartige Sitze werden als Vordersitze in Kraftfahrzeugen eingesetzt, wobei durch das Vorklappen der Rückenlehne das Einsteigen eines Passagiers oder das Einschieben eines Gegenstandes in den Fond des Kraftfahrzeugs erleichtert werden soll. Eine zusätzliche Erleichterung beim Einsteigen, die bei zweitürigen Kraftfahrzeugen von Bedeutung ist, wird dabei dadurch erreicht, daß der Sitz nach dem Vorklappen der Rückenlehne nach vorne verschoben werden kann. Hierzu weist der Kraftfahrzeugsitz weiterhin folgendes auf:
- eine Längsführung, mit der das Sitzgestell zur Einstellung der Sitzlängsposition in Sitzlängsrichtung bewegbar ist;
- eine Feststellvorrichtung zum Arretieren des Sitzgestells in einer zuvor eingestellten Sitzlängsposition;
- ein Betätigungselement zum Entriegeln der Feststellvorrichtung, so daß das Sitzgestell in Sitzlängsrichtung bewegbar ist;
- einen Koppelmechanismus zur Kopplung der Feststellvorrichtung mit der Rückenlehne, der auf das Betätigungselement einwirkt und dadurch die Feststellvorrichtung entriegelt, wenn die Rückenlehne in Richtung auf die Sitzfläche vorgeklappt ist;
- eine Memory-Einrichtung, mittels der das Sitzgestell bei einer Bewegung in Sitzlängsrichtung automatisch in einer vorgebbaren, als Memory-Position definierten Sitzlängsposition angehalten werden kann, wobei ein dem Sitzgestell zugeordneter, in Sitzlängsrichtung bewegbarer Anschlag mit einem Gegenanschlag der Memory-Einrichtung in Eingriff tritt;
- Einstellmittel der Memory-Einrichtung, mit denen die Memory-Position durch Verschieben der Position des Gegenanschlages in Sitzlängsrichtung einstellbar ist;
- eine Verriegelungsvorrichtung der Memory-Einrichtung zum Verriegeln einer eingestellten Memory-Position und
- Schaltmittel, mit denen die Verriegelungsvorrichtung entriegelbar ist, um die Memory-Position einstellen zu können.

Ein derartiger, aus der WO 00/55002 bekannter Sitz bietet zum einen die Möglichkeit, nach dem Vorklappen der Rückenlehne in Richtung auf die Sitzfläche das Sitzgestell, und somit den gesamten Fahrzeugsitz, nach vorne zu verschieben, um das Einsteigen eines Passagieres in den Fond zu erleichtern (Easy-Entry-Funktion). Gleichzeitig kann der Sitz anschließend sehr einfach wieder in seine ursprüngliche Sitzlängsposition verschoben werden, wenn diese Sitzlängsposition mittels der hierfür vorgesehenen Memory-Einrichtung als Memory-Position gespeichert ist. In diesem Fall wird das Sitzgestell beim Zurückschieben des Sitzes automatisch in der Memory-Position angehalten, wobei ein dem Sitzgestell zugeordneter Anschlag mit einem Gegenanschlag der Memory-Einrichtung zusammenwirkt.

Unter einer Gebrauchsposition der Rückenlehne wird dabei vorliegend eine Position verstanden, in der diese eine derartige Neigung bezüglich der im wesentlichen horizontalen Sitzfläche aufweist, dass das Abstützen des Rückens eines auf dem Sitz befindlichen Insassen möglich ist. Zum Ausüben der Easy-Entry-Funktion muß der Sitz aus einer solchen Gebrauchsposition heraus in Richtung auf die Sitzfläche vorgeklappt werden.

Unter dem Sitzgestell werden sämtliche Elemente des Sitzes verstanden, die mittels der Längsführung in Sitzlängsrichtung verschiebbar sind, also auch die in Sitzlängsrichtung verschiebbaren Teile der Längsführung selbst.

Aus der US 6 227 596 B1 ist ein Fahrzeugsitz mit einer Gleitschiene bekannt, bei dem eine Verriegelungsvorrichtung der Memory-Einrichtung im entriegelten Zustand gehalten wird, indem eine Sperrklinke der Verriegelungsvorrichtung mittels einer Feder in Richtung auf den entriegelten Zustand vorgespannt ist. Somit gerät die Verriegelungsvorrichtung der Memory-Einrichtung automatisch in den entriegelten Zustand, wenn sie nicht durch ein Element des Kraftfahrzeugsitzes hieran gehindert wird.

Der Erfindung liegt das Problem zugrunde, einen Kraftfahrzeugsitz der eingangs genannten Art weiter zu verbessern, insbesondere im Hinblick auf eine zuverlässige Speicherung der aktuellen Sitzposition als Memory-Position beim Vorklappen der Rückenlehne bzw. im Hinblick auf das spätere Anfahren der gespeicherten Memory-Position mit in ihrer Gebrauchposition befindlicher, also hochgeklappter Rückenlehne.

Dieses Problem wird erfindungsgemäß durch die Schaffung eines Kraftfahrzeugsitzes mit den Merkmalen des Patentanspruchs 1 gelöst.

Nach Anspruch 1 ist ein (vorzugsweise am Sitzgestell) beweglich gelagerter Niederhalter vorgesehen, der in der Memory-Position des Sitzes und bei in Gebrauchsposition befindlicher (hochgeklappter) Rückenlehne derart auf die Memory-Einrichtung einwirkt, dass deren Verriegelungsvorrichtung entriegelt ist, und es ist eine (gemeinsam mit der Verriegelungsvorrichtung in Sitzlängsrichtung verschiebbare) Rampe vorgesehen, mit der der Niederhalter beim Anfahren der Memory-Position mit in Gebrauchsposition befindlicher Rückenlehne in Wirkverbindung tritt, wobei er sich entlang und auf dieser bewegt.

Der Niederhalter entriegelt beim Einwirken auf die Memory-Einrichtung deren Verriegelungsvorrichtung und kann ferner als Mitnehmer dienen, der eine Neueinstellung der Memory-Position beim Verschieben des Sitzes (mit hochgeklappter Rückenlehne) ermöglicht, also insbesondere in einem Fall, in dem der Sitz zusammen mit einem darauf befindlichen Fahrzeuginsassen zur Einstellung der Sitzlängsposition verschoben wird.

Dabei ist an der Verriegelungsvorrichtung, insbesondere an einer Sperrklinke, ein Anschlag vorgesehen, der beim Anfahren der Memory-Position derart mit einem sitzgestellseitigen (mit der Sitzlängsfüh- rung verbundenen) Anschlag zusammenwirkt, dass eine Entriegelung der Verriegelungsvorrichtung blockiert ist, bis das Sitzgestell die Memory-Position erreicht hat.

Die erfindungsgemäß vorgesehene Rampe ermöglicht beim Anfahren der Memory-Position mit in Gebrauchsposition befindlicher, hochgeklappter Rückenlehne, eine automatische Entriegelung und gegebenenfalls Mitnahme der Verriegelungsvorrichtung der Memory-Einrichtung, indem der Niederhalter mittels der Rampe gezielt in eine Position geführt wird, in der er derart auf die Verriegelungsvorrichtung einwirkt, dass diese entriegelt ist. Im Ergebnis kann beim Verstellen des Sitzes mit hochgeklappter Rückenlehne eine automatische Neueinstellung der Memory-Position erfolgen.

Insbesondere ermöglicht die erfindungsgemäße Lösung die Verwendung eines längsverschiebbaren, jedoch nicht verschwenkbaren (also quer zu seiner Verschieberichtung starr gelagerten) Niederhalters zum Entriegeln der Verriegelungsvorrichtung. Vorzugsweise ist der Mitnehmer entlang einer Geraden, und zwar der vertikalen Fahrzeugachse (also insbesondere senkrecht zur Sitzlängsrichtung), beweglich gelagert. Mittels der Rampe kann der Niederhalter beim Anfahren der Memory-Position derart geführt werden, dass ein Verschwenken nicht erforderlich ist.

Der Niederhalter kann beim Anfahren der Memory-Position auf der Rampe gleiten oder sich mittels Rollen oder Rändern auf der Rampe bewegen.

Gemäß einer Ausführungsform der Erfindung ist der beweglich gelagerte der Niederhalter in seiner Bewegungsrichtung federelastisch gelagert, um das Befahren der (in Sitzlängsrichtung geneigten) Rampe zu ermöglichen. Alternativ kann vorgesehen sein, dass sich der Niederhalter auf elastischen Rädern oder Rollen entlang der Rampe bewegt.

Die Verriegelungsvorrichtung der Memory-Einrichtung weist eine in Sitzlängsrichtung verschiebbare Verriegelungseinheit auf, die zugleich die Memory-Position definiert, wobei der Verriegelungseinheit eine Rasteinrichtung zugeordnet ist, die in Sitzlängsrichtung hintereinander angeordnete Raststellen aufweist, an denen die Verriegelungseinheit bezüglich der Rasteinrichtung verriegelbar ist. Die Verriegelungseinheit selbst umfasst eine schwenkbar gelagerte Sperrklinke, die ein Rastelement aufweist, dass an den Raststellen in die Rasteinrichtung einrasten kann. Zum Entriegeln einer solchen Verriegelungsvorrichtung wirkt der Niederhalter auf die Sperrklinke ein.

Die Rampe ist in diesem Fall vorzugsweise an der schwenkbar gelagerten Sperrklinke der Verriegelungseinheit ausgebildet, so dass beim Befahren der Rampe durch den Niederhalter die Sperrklinke zunehmend verschwenkt und die Verriegelungsvorrichtung entriegelt wird. Die Rampe ermöglicht dabei insbesondere das Auffahren des Mitnehmers auf die Sperrklinke beim Anfahren der Memory-Position.

Die Rampe erstreckt sich dabei quer zur Sitzlängsrichtung der nur über einen Teil der Breite Sperrklinke, so dass die benachbarten Bereiche als Anschlag wirken können.

Der Niederhalter dient vorzugsweise gleichzeitig als Mitnehmer dient, der in der Memory-Position des Sitzes und bei in Gebrauchsposition befindlicher Rückenlehne derart auf die Memory-Einrichtung einwirkt, dass die Memory-Position bei einer Einstellung der Sitzlängsposition gemeinsam mit dem Sitzgestell verstellt wird. Es ist dann kein separater zusätzlicher Mitnehmer für die Verstellung der Memory-Position beim Verschieben des Sitzes erforderlich.

Der Niederhalter kann dann bei hochgeklappter Rückenlehne mittels eines Sperrelementes in der Stellung gehalten werden, in der er die Verriegelungsvorrichtung entriegelt, und kann ferner mit einer Rückstelleinrichtung, insbesondere einer Rückstellfeder, gekoppelt sein, die bei einem Vorklappen der Rückenlehne den Mitnehmer von der Memory-Einrichtung abhebt.

Bei einer Verriegelungsvorrichtung mit einer in Sitzlängsrichtung verschiebbare Verriegelungseinheit, die im verriegelten Zustand die Memory-Position definiert und der eine Rasteinrichtung zugeordnet ist, welche in Sitzlängsrichtung hintereinander angeordnete Raststellen umfaßt, an denen die Verriegelungseinheit bezüglich der Rasteinrichtung verriegelbar ist, und mit einer an der Verriegelungseinheit eine schwenkbar gelagerten Sperrklinke, die mit einem Rastelement versehen ist, das an den genannten Raststellen in die Rasteinrichtung einrasten kann, wirkt der Mitnehmer wirkt vorzugsweise über die Sperrklinke auf die Memory-Einrichtung ein.

An der Sperrklinke kann ein Anschlag vorgesehen sein, auf den der Mitnehmer einwirkt, wenn sich die Rückenlehne in ihrer Gebrauchsposition befindet, so daß die Verriegelungseinheit bei einer Einstellung der Sitzlängsposition mit hochgeklappter Rückenlehne mitgenommen werden kann. Der Anschlag kann auch durch eine Mulde in der Sperrklinke gebildet werden, in die der gemeinsam mit dem Sitzgestell in Sitzlängsrichtung verschiebbare Mitnehmer eingreift.

Das Festlegen der Memory-Position mittels der Verriegelungsvorrichtung erfolgt in der Regel nicht stufenlos, sondern es ist eine Mehrzahl von Raststellen vorgesehen, an denen jeweils eine Verriegelung der Memory-Einrichtung und somit eine Festlegung der Memory-Position erfolgen kann. Dies kann zu Problemen führen, wenn die Sitzlängsverstellung gleichzeitig eine stufenlose Einstellung der Sitzlängsposition ermöglicht. Denn es wird dann regelmäßig der Fall auftreten, dass ein Sitzbenutzer den Sitz in eine Sitzlängsposition verfährt und dort verriegeln möchte, in der eine Verriegelung der (nicht stufenlosen) Memory-Einrichtung nicht möglich ist. In einem solchen Fall muss sichergestellt werden, dass nach dem Auslösen der Easy-Entry-Funktion (durch Vorklappen der Rückenlehne auf die Sitzfläche) aus einer Position heraus, in der die Memory-Einrichtung nicht verriegelt ist, weil der aktuell eingestellten Sitzlängsposition keine entsprechende Raststelle der Verriegelungsvorrichtung zugeordnet war, diese Verriegelung nachgeholt werden kann. Hierzu weist erfindungsgemäß die Memory-Einrichtung einen Anschlag, der im nicht verriegelten Zustand der Memory-Einrichtung mit einem zugeordneten Anschlag des Sitzgestells (der z. B. an der sitzseitigen Schiene der Längsführung vorgesehen sein kann) derart zusammenwirkt, dass die in Sitzlängsrichtung in beweglichen Teile der Memory-Einrichtung zunächst beim Verschieben des Sitzes nach vorne mit vorgeklappter Rückenlehne mitgenommen werden, bis die Verriegelungsvorrichtung der Memory-Einrichtung an der nächstliegenden Raststelle verrastet und dadurch verriegelt wird. Bei diesem Einrasten bzw. Verriegeln der Verriegelungsvorrichtung wird der entsprechende Anschlag derart bewegt, dass er sich nicht mehr in Eingriff mit dem zugeordneten sitzgestellseitigen Anschlag befindet. Das Sitzgestell kann dann weiter in Sitzlängsrichtung verschoben werden, wobei die Memory-Einrichtung in der zuvor verriegelten Memory-Position verbleibt.

Die erfindungsgemäße Lösung ermöglicht eine sehr kompakte Anordnung sämtlicher Baugruppen, die die Easy-Entry-Funktion gewährleisten, einschließlich der Memory-Einrichtung und zuzüglich der Feststellvorrichtung für die Sitzlängsverstellung. Hierdurch kann insbesondere die Memory-Einrichtung vollständig innerhalb des von den Schienen der Längsführung umschlossenen Raumes angeordnet werden.

Ferner ist die Rückenlehne bevorzugt derart mit der Feststellvorrichtung einerseits und mit der Verriegelungsvorrichtung andererseits gekoppelt, dass beim Vorklappen der Rückenlehne in Richtung auf die Sitzfläche zunächst mittels der Verriegelungsvorrichtung die aktuelle Sitzlängsposition als Memory-Position verriegelt und erst danach die Feststellvorrichtung entriegelt wird.

Hierdurch wird sichergestellt, daß bei Ausführung der Easy-Entry-Funktion eine Bewegung des Sitzgestelles in Sitzlängsrichtung aus der aktuellen Sitzposition heraus erst möglich ist, nachdem zuvor die aktuelle Sitzposition als Memory-Position gespeichert worden ist.

In einer bevorzugten Ausführungsform der Erfindung ist vorgesehen, dass der Koppelmechanismus, der auf das Betätigungselement einwirkt und die Feststellvorrichtung entriegelt, wenn die Rückenlehne in Richtung auf die Sitzfläche vorgeklappt ist, sowie die Mittel, über die die Verriegelungsvorrichtung mit der Rückenlehne gekoppelt ist, eine mehrstufig wirkende Ver- und Entriegelungskinematik bilden, die einerseits auf die Feststellvorrichtung und andererseits auf die Verriegelungsvorrichtung einwirkt, um diese in mindestens zwei Stufen zu betätigen. Dabei kann in einer ersten Stufe die aktuelle Sitzlängsposition mittels der Verriegelungsvorrichtung als Memory-Position verriegelt und in einer zweiten Stufe die Feststellvorrichtung entriegelt werden.

Gemäß einer Variante der Erfindung wirkt der Koppelmechanismus erst auf das Betätigungselement ein, um die Feststellvorrichtung zu entriegeln, nachdem die aktuelle Sitzlängsposition mittels der Verriegelungsvorrichtung als Memory-Position verriegelt worden ist.

Nach einer anderen Variante wirkt der Koppelmechanismus bereits auf das Betätigungselement ein, um die Feststellvorrichtung zu entriegeln, bevor die aktuelle Sitzlängsposition mittels der Verriegelungsvorrich- tung als Memory-Position verriegelt worden ist, und dass die Entriegelung der Feststellvorrichtung erst wirksam ist, nachdem die aktuelle Sitzlängsposition mittels der Verriegelungsvorrichtung als Memory-Position verriegelt worden ist.

Eine weitere Ausgestaltung einer Anordnung zur Betätigung der Memory-Einrichtung, mittels der zunächst die aktuelle Sitzlängsposition als Memory-Position verriegelt werden kann, bevor anschließend die Feststellvorrichtung der Sitzlängsführung entriegelt wird, ist charakterisiert durch einen (vorzugsweise am Sitzgestell) beweglich gelagerten Mitnehmer, der bei in Gebrauchsposition befindlicher Rückenlehne mittels eines Sperrelementes in einer Position gehalten wird, in der er - in der Memory-Position des Sitzes bzw. Sitzgestelles - derart auf die Memory-Einrichtung einwirkt, daß die Memory-Position bei einer Einstellung der Sitzlängsposition gemeinsam mit dem Sitzgestell verstellt werden kann, wobei der Mitnehmer vorzugsweise mit einer Rückstellfeder gekoppelt ist, die bei einem Vorklappen der Rückenlehne den Mitnehmer von der Memory-Einrichtung abhebt.

Der Mitnehmer entriegelt beim Einwirken auf die Memory-Einrichtung deren Verriegelungsvorrichtung und ermöglicht ferner eine Neueinstellung der Memory-Position beim Verschieben des Sitzes.

Um das Abheben des Mitnehmers von der Memory-Einrichtung beim Vorklappen der Rückenlehne zu ermöglichen, gibt das Sperrelement beim Vorklappen der Rückenlehne den Mitnehmer frei, indem es von dem Mitnehmer abgehoben wird. Die Memory-Einrichtung bzw. deren Verriegelungsvorrichtung kann dann in den verriegelten Zustand übergehen, so daß beim Vorklappen der Rückenlehne mit dem Ziel, die Easy-Entry-Funktion auszuführen, die aktuelle Sitzposition automatisch mittels der Memory-Einrichtung gespeichert wird.

Diese Anordnung ermöglicht zum einen einen sehr kompakten Aufbau der zur Schaffung der Easy-Entry-Funktion vorgesehenen Baugruppen, wie nachfolgend bei der Beschreibung von Ausführungsbeispielen anhand der Figuren deutlich werden wird. Zum anderen kann in einfacher Weise sichergestellt werden, daß beim Anfahren der Memory-Position - je nach Bedarf - der Sitz wahlweise in der Memory-Position gestoppt wird oder die Memory-Position überfährt und diese gleichzeitig neu einstellt.

In einer bevorzugten Ausführungsform der Erfindung hebt der Mitnehmer beim Vorklappen der Rückenlehne von der Memory-Einrichtung ab, bevor die mit der Rückenlehne gekoppelte Feststellvorrichtung der Sitzlängsführung entriegelt wird. Hierdurch ist sichergestellt, daß die aktuelle Sitzposition mittels der Memory-Einrichtung gespeichert wird, bevor die Sitzlängsverstellung nach Entriegelung der Feststellvorrichtung einsetzen kann.

Dies wird beispielsweise dadurch erreicht, daß bei einem Vorklappen der Rückenlehne um einen ersten Winkel aus ihrer Gebrauchsposition heraus der Mitnehmer von der Memory-Einrichtung abhebt und daß bei einem weiteren Vorklappen der Rückenlehne die Feststellvorrichtung entriegelt wird. Die absolute Größe der vorgenannten Winkel hängt dabei davon ab, welche Neigung die Rückenlehne zuvor in der Gebrauchsposition aufwies. Alternativ können die beiden Winkel auch relativ zur Vertikalen (d.h. zu einer vertikal ausgerichteten Rückenlehne) definiert werden. Entscheidend ist in jedem Fall, daß absolute der Winkel, um den die Rückenlehne beim Vorklappen verschwenkt werden muß, bis die Feststellvorrichtung entriegelt wird, größer ist als der Winkel, um den die Rückenlehne insgesamt nach vorne geklappt werden muß, bis der Mitnehmer von der Memory-Einrichtung abhebt.

Gemäß einer Ausführungsform der Erfindung ist das Sperrelement in Richtung auf den Mitnehmer elastisch vorgespannt, wobei die Vorspannung, mit der das Sperrelement auf den Mitnehmer einwirkt, größer ist als die Rückstellwirkung der mit dem Mitnehmer gekoppelten Rückstellfeder. Hierdurch kann das Sperrelement den Mitnehmer entgegen der Wirkung der Rückstellfeder in einer Position halten, in der der Mitnehmer derart auf die Memory-Einrichtung einwirkt, daß diese entriegelt ist, so daß bei einer Verstellung des Sitzes aus der Memory-Position heraus mit in Gebrauchsposition befindlicher Rückenlehne die Memory-Position neu eingestellt wird.

Andererseits muß das Sperrelement derart mit der Rückenlehne gekoppelt sein, daß beim Vorklappen der Rückenlehne das Sperrelement von dem Mitnehmer abgehoben wird. Zur Kopplung des Sperrelementes mit der Rückenlehne kann ein Zugmittel, insbesondere in Form der Seele eines Bowdenzugs, dienen.

Das Sperrelement ist vorzugsweise schwenkbar gelagert und an einem Hebel vorgesehen, der zugleich einen Betätigungsabschnitt zum Entriegeln der Feststellvorrichtung der Sitzlängsführung aufweist.

Der Mitnehmer wiederum ist vorzugsweise längsverschieblich gelagert und derart ausgebildet, daß er formschlüssig auf die Memory-Einrichtung einwirken kann, um bei einer Einstellung der Sitzlängsposition (mit in Gebrauchsposition befindlicher Rückenlehne, d.h. bei entriegelter Memory-Einrichtung) zugleich eine Neueinstellung der Memory-Position zu bewirken.

Wenn sich der Sitz außerhalb seiner Memory-Position befindet, dann ist der Mitnehmer in Sitzlängsrichtung von der Memory-Einrichtung beabstandet, so daß die Verriegelungsvorrichtung der Memory-Einrichtung ohne weiteres ihren verriegelten Zustand einnehmen kann. Hierzu ist die Verriegelungsvorrichtung vorzugsweise in Richtung auf den verriegelten Zustand vorgespannt.

Beim Anfahren der Memory-Position mit in Gebrauchsposition befindlicher Rückenlehne wirkt der Mitnehmer vorzugsweise derart auf die Memory-Einrichtung ein, daß deren Verriegelungsvorrichtung entriegelt wird. Hierdurch wird gewährleistet, daß die Memory-Position bei einer Verstellung des Sitzes mit hochgeklappter Rückenlehne (d.h. insbesondere, während sich ein Fahrzeuginsasse auf dem entsprechenden Sitz befindet), ohne weiteres neu eingestellt werden kann.

Umgekehrt befindet sich der Mitnehmer bei vorgeklappter Rückenlehne unter der Wirkung seiner Rückstellfeder in einer Position, in der er nicht auf die Memory-Einrichtung einwirkt, so daß beim Anfahren der Memory-Position mit vorgeklappter Rückenlehne (d.h. bei einer Ausführung der Easy-Entry-Funktion) der Sitz in der Memory-Position angehalten wird, so daß die vor Ausübung der Easy-Entry-Funktion bestehende Sitzposition automatisch wiedergefunden wird.

Um das Anfahren der Memory-Position und Entriegeln der Memory-Einrichtung bei in Gebrauchsposition befindlicher Rückenlehne zu erleichtern, weist die Memory-Einrichtung vorzugsweise eine Rampe auf, mit der der Mitnehmer beim Anfahren der Memory-Position in Wirkverbindung tritt, z.B. indem der Mitnehmer auf der Rampe in die Memory-Position gleitet.

Weitere Merkmale und Vorteile der Erfindung werden bei der nachfolgenden Beschreibung eines Ausführungsbeispiels anhand der Figuren deutlich werden.

Es zeigen:
- Figur 1a -: eine perspektivische Darstellung von Teilen eines Sitzgestells mit einer Sitzlängsführung, mit einer Feststellvorrichtung der Sitzlängsführung sowie mit einer programmierbaren Memory-Einrichtung zum automatischen Auffinden einer vorgegebenen Sitzlängsposition, in einem Zustand, in dem die Rückenlehne des entsprechenden Sitzes sich in ihrer Gebrauchsposition befindet;
- Figur 1b -: eine Darstellung gemäß Figur 1a, wobei die Schienen der Sitzlängsführung nicht mit dargestellt sind;
- Figur 2 -: eine Darstellung gemäß Figur 1b, wobei die Rückenlehne des Sitzes aus ihrer Gebrauchsposition heraus ein Stück weit nach vorne geklappt worden ist;
- Figur 3 -: eine weitere Darstellung gemäß Figur 1b, wobei die Rückenlehne des Sitzes bis auf die zugehörige Sitzfläche vorgeklappt worden ist;
- Figur 4 -: eine Abwandlung der Memory-Einrichtung aus den Figuren 1a bis 3;
- Figuren 5a bis 5c -: die Memory-Einrichtung aus Figur 4 in verschiedenen Phasen beim Anfahren der Memory-Position eines Sitzes, dessen Rückenlehne sich in ihrer Gebrauchsposition befindet;
- Fig. 6 -: eine perspektivische Darstellung eines aus dem Stand der Technik bekannten Sitzgestelles in einem Zustand, in dem der Sitz mit hochgeklappter Rückenlehne in seiner Memory-Position verriegelt ist;
- Fig. 6a -: eine Rückansicht der Darstellung aus Fig. 6;
- Fig. 7 -: eine Darstellung gemäß Fig. 6 in einem Zustand, in dem die Rückenlehne nach vorne geklappt ist, um den Sitz mit vorgeklappter Rückenlehne verschieben zu können;
- Fig. 8 -: eine Darstellung gemäß Fig. 6 in einem Zustand, in dem bei hochgeklappter Rückenlehne in der Memory-Position ein Betätigungshebel betätigt wurde, um die Memory-Position neu einzustellen;
- Fig. 9 -: eine Darstellung gemäß Fig. 6 in einem Zustand, in dem die Memory-Position des Sitzes mit hochgeklappter Rückenlehne angefahren wird;
- Fig. 10 -: eine Darstellung gemäß Fig. 6 in einem Zustand, in dem die Memory-Position des Sitzes mit hochgeklappter Rückenlehne erreicht wird;
- Fig. 11 -: eine schematische Darstellung eines Sitzgestelles.

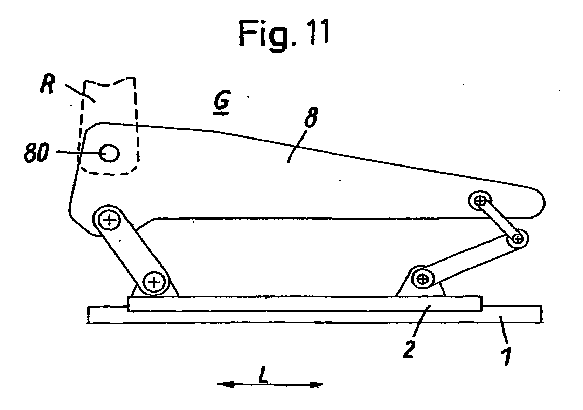

Das in Figur 11 in einer Seitenansicht dargestellte Sitzgestell G (Sitzuntergestell) umfaßt eine Sitzschiene 2, die in Sitzlängsrichtung L beweglich auf einer an der Fahrzeugkarosserie zu befestigenden Unterschiene 1 lagert, und ein Sitzseitenteil 8, das über vordere und hintere Gelenkhebel höhenverstellbar an der Sitzschiene 2 angelenkt ist. Auf seiner anderen, in Figur 11 nicht erkennbaren Längsseite weist das Sitzgestell G eine entsprechende Anordnung auf. Zwischen den beiden Sitzseitenteilen des Sitzgestelles G erstreckt sich eine Sitzfläche, die ein Sitzpolster aufnimmt, auf dem ein Fahrzeuginsasse Platz nehmen kann.

Ferner weisen die Seitenteile 8 des Sitzgestelles G jeweils eine Lagerstelle 80 zur schwenkbaren Lagerung einer in Figur 11 gestrichelt angedeuteten Rückenlehne R auf.

Vorliegend werden als Teile des Sitzgestell jeweils alle diejenigen Bauteile verstanden, die auf der karosseriefesten Unterschiene 1 in Sitzlängsrichtung bewegbar sind, also insbesondere die Sitzschiene 2, das Sitzseitenteil 8 sowie die hiermit verbundenen weiteren Bauteile des Sitzes.

Wird ein derartiger in Längsrichtung L verstellbarer Fahrzeugsitz für ein zweitüriges Fahrzeug verwendet, so ist es bekannt, zur Erleichterung des Einstiegs in den Fond des Fahrzeugs die Lehne an die Sitzlängsverstellung zu koppeln und zwar derart, daß bei einem Vorklappen der Rückenlehne R in Richtung auf die sich zwischen den Sitzseitenteilen 8 erstreckende Sitzfläche eine der Sitzlängsführung 1, 2 zugeordnete Feststellvorrichtung entriegelt wird und der Sitz mit vorgeklappter Rückenlehne vorgeschoben werden kann. Es handelt sich hierbei um eine sogenannte Easy-Entry-Funktion.

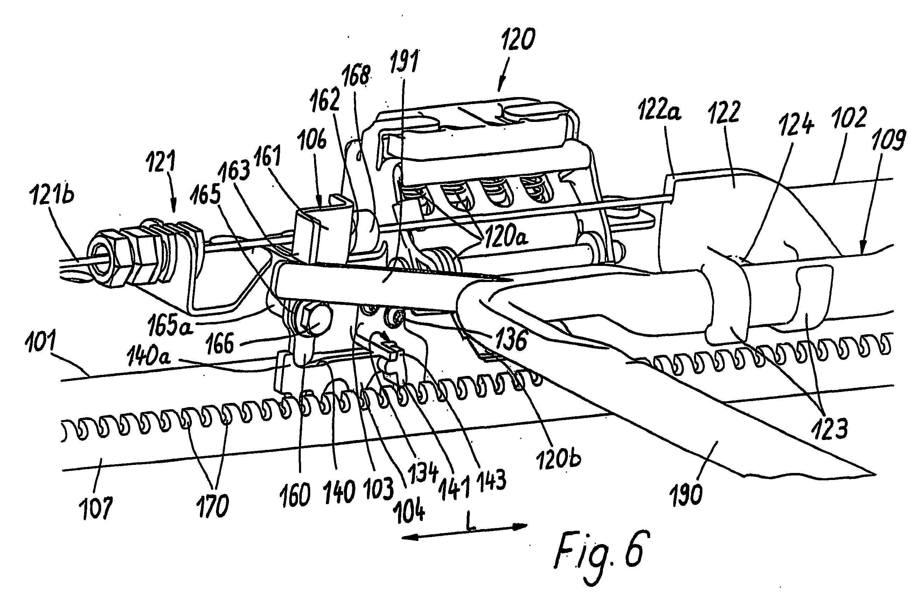

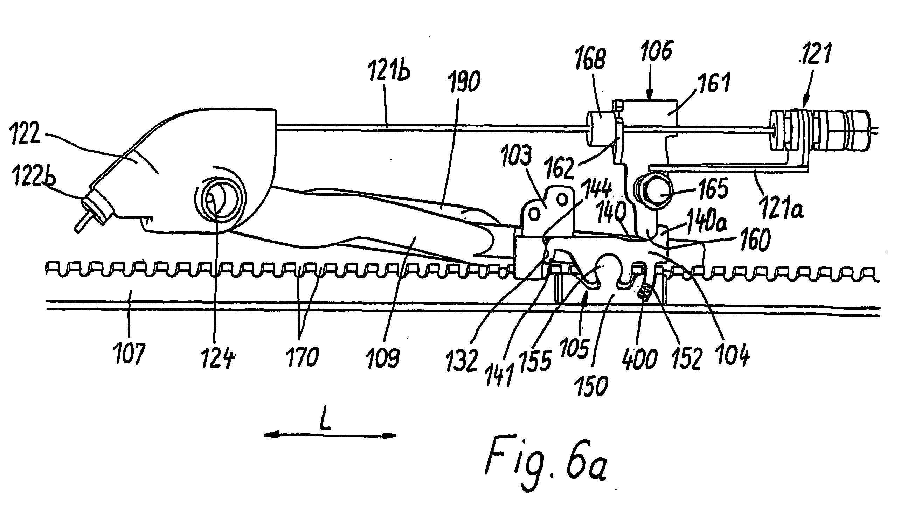

Im folgenden wird zunächst anhand einer in den Figuren 6 bis 10 dargestellten und aus der WO 00/55002 bekannten Sitzanordnung das Grundprinzip der Easy-Entry-Funktion bei Verwendung einer programmierbaren Memory-Einrichtung zum automatischen Auffinden einer vorgebbaren Sitzlängsposition erläutert. Für weitere Einzelheiten hierzu wird auf die WO 00/55002 verwiesen, die diesbezüglich ausdrücklich zum Gegenstand der vorliegenden Beschreibung gemacht wird.

In der perspektivischen Vorderansicht gemäß Figur 6 sowie der zugehörigen Rückansicht gemäß Figur 6a sind eine karosseriefeste Schiene 101 und eine daran in Sitzlängsrichtung L beweglich geführte Sitzschiene 102 dargestellt, wobei an der karosseriefesten Schiene 101 eine Rastschiene 107 mit einer Vielzahl in Sitzlängsrichtung L hintereinander angeordneter Rastöffnungen 170 befestigt ist. Die Sitzschiene 102 trägt die übrigen Komponenten des Sitzgestelles, vergl. Figur 11.

Die Sitzschiene 102 ist bezüglich der karosseriefesten Schiene 101 mittels einer Feststellvorrichtung 120 arretierbar. Hierbei kann es sich um eine übliche Feststellvorrichtung für eine Sitzlängsverstellung handeln. In den Figuren 6 und 6a sind das Gehäuse, ein schwenkbar gelagertes Betätigungselement 120b sowie eine auf das Betätigungselement 120b einwirkende Drehfeder einer bekannten Feststellvorrichtung dargestellt, deren Gehäuse an der Sitzschiene 2 befestigt ist. Die Drehfeder dient u.a. der Herausnahme von Spiel aus der Anordnung, um Klappergeräusche zu verhindern.

Diese Feststellvorrichtung umfaßt beispielsweise gemäß der DE 299 10 720 U1 eine Mehrzahl innerhalb des Gehäuses angeordneter Sperrzähne, die - mittels in dem Gehäuse gelagerter Federn in Form von Schraubenfedern - elastisch in Richtung auf eine an der karosserieseitigen Schiene 1 befestigte, in den Figuren 6 und 6a nicht erkennbare, Rasteinrichtungen vorgespannt sind. Aufgrund der auf die Sperrzähne wirkenden Vorspannung rasten die der Sitzschiene 102 zugeordneten Sperrzähne automatisch in die karroseriefeste Rasteinrichtung ein, so daß die Sitzlängsverstellung arretiert ist, wenn nicht mittels des hierfür vorgesehenen Betätigungselementes 120b die Sperrzähne außer Eingriff mit der Rasteinrichtung gebracht sind.

Da das Betätigungselement 120b der Feststellvorrichtung 120 mittels der Federanordnung 120a, die aus den innerhalb des Gehäuses angeordneten, auf die Sperrzähne einwirkenden Federn sowie der außerhalb des Gehäuses angeordneten Drehfeder besteht, entgegen der Richtung vorgespannt ist, in die es zum Entriegeln der Feststellvorrichtung 120 verschwenkt werden muß, kann die Feststellvorrichtung 120 nur dann entriegelt werden, wenn auf deren Betätigungselement 120b eine Kraft entgegen der Wirkung der Federanordnung 120a ausgeübt wird.

Zum Entriegeln der Feststellvorrichtung 120 kann das Betätigungselement 120b einerseits von einem Sitzbenutzer unmittelbar dadurch betätigt werden, daß dieser einen am Sitzgestell schwenkbar angelenkten, ein Querrohr 190 aufweisenden Betätigungshebel 109 an einem hierfür vorgesehenen (in den Figuren 6 und 6a nicht erkennbaren) Betätigungsgriff 190 ergreift und diesen entgegen dem Uhrzeigersinn verschwenkt, wodurch sich das Betätigungselement 120b entgegen der Vorspannung der Federanordnung 120a nach unten bewegt. Zum anderen kann die Feststellvorrichtung 120 auch durch Vorklappen der Sitzlehne entriegelt werden, wozu die Sitzlehne über einen Bowdenzug, der ein Seil 121b aufweist und dessen (nicht dargestellter) Bowden sich an einer Bowdenabstützung 121 abstützt, mit dem Betätigungshebel 109 gekoppelt ist. Ferner ist auf der Schwenkachse des Betätigungshebels 109 mittels eines Achsstummels 124 ein Getriebeteil 122 gelagert, das eine Führung 122a sowie eine Einhängung 122b für das Seil 121b des Bowdenzugs aufweist. Dieses Getriebeteil 122 setzt eine Straffung des Seiles 121b bei einem Vorklappen der Rückenlehne in eine Schwenkbewegung um, die wiederum durch zwei Arme 123 des Getriebes, welche den Betätigungshebel 109 umgreifen, auf diesen übertragen wird. Hierdurch verschwenkt der Betätigungshebel 109 bei einem Vorklappen der Rückenlehne im Uhrzeigersinn und entriegelt über das Betätigungselement 120b die Feststellvorrichtung 120.

Auf dem Seil 121b des Bowdenzugs ist zudem zwischen der Bowdenabstützung 121, die mittels eines Befestigungsbleches 121a an der Sitzschiene befestigt ist, und dem Getriebe 122 ein Seilnippel 168 befestigt, z.B. durch Verquetschen. Dem Seilnippel 168 ist ein Schaltelement in Form eines Schalthebels 106 zugeordnet, das mittels einer Lagerbuchse 165, eines Stufenbolzens 165a sowie einer Schraube 166 um eine durch die Längsachse des Stufenbolzens 165a gebildete Achse verschwenkbar gelagert und gleichzeitig an dem Sitzgestell bzw. dessen Sitzschiene 102 befestigt ist. Der Schalthebel 106 weist in einem oberen Abschnitt 161 einen Anschlag 162 auf, der unmittelbar neben dem Seilnippel 168 angeordnet ist und auf den der Seilnippel 168 in Sitzlängsrichtung einwirken kann, wodurch der Schalthebel 106 verschwenkt wird.

Der unterhalb der Lagerbuchse 165 sowie des Stufenbolzens 165a angeordnete zweite Endabschnitt des Schalthebels 106 bildet einen Betätigungsabschnitt 160, dem ein Betätigungsabschnitt einer Sperrklinke 104 der Memory-Einrichtung zugeordnet ist. Der Betätigungsabschnitt der Sperrklinke 104 wird dabei durch eine Betätigungsfläche 140 auf der Oberseite der Sperrklinke gebildet.

Der Schalthebel 106 ist vorliegend durch einen Fortsatz 191 des Betätigungshebels 109, auf dem sich der obere Abschnitt 161 des Schalthebels 106 mit einem Anschlag 163 vertikal (quer zur Sitzlängsrichtung L) abstützt, in der in den Figuren 6 und 6a gezeigten Position arretiert, in der dessen Betätigungsabschnitt 160 auf die Betätigungsfläche 140 der Sperrklinke 104 einwirkt. Das hierfür erforderliche Moment wird durch die Federanordnung 120a der Feststellvorrichtung 120 aufgebracht, die über das Betätigungselement 120b sowie den Betätigungshebel 109 auf den Hebelfortsatz 191 wirkt.

Alternativ oder zusätzlich kann die senkrechte Stellung des Schalthebels 106 auch durch eine unmittelbar dem Schalthebel 106 angeordnete Feder oder dadurch unterstützt werden, daß der Schalthebel 106 mit hinreichend Reibung gelagert ist, die durch die Wirkung der Druckfeder 400 der Sperrklinke 104 nicht überwunden werden kann.

Die Sperrklinke 104 selbst ist, wie insbesondere anhand Fig. 6a erkennbar, schwenkbar auf einem Lagerzapfen 155 eines Gleiters 105 gelagert, der mit einem Grundkörper 150 in Sitzlängsrichtung L beweglich neben den Rastöffnungen 170 der Rastschiene 107 geführt ist. Der Gleiter weist in seinem Grundkörper 150 eine Ausnehmung 152 auf, in der eine Druckfeder 400 angeordnet ist, die unterhalb des Betätigungsabschnittes 140 der Sperrklinke 104 auf diese einwirkt und dadurch die Sperrklinke 104 derart vorspannt, daß ein am anderen Ende der Sperrklinke 104 angeordneter Rasthaken 141 die Tendenz hat, in die Rastschiene 107 einzugreifen. Hieran wird in dem in den Figuren 6 und 6a dargestellten Zustand, in dem der Sitz mit nicht vorgeklappter Rückenlehne in der Memory-Position verriegelt ist, die Sperrklinke dadurch gehindert, daß der Betätigungsabschnitt 160 des Schalthebels 106 sich auf der Betätigungsfläche 140 der Sperrklinke 104 abstützt, so daß diese nicht um den Lagerzapfen 155 verschwenken kann, um den Rasthaken 141 mit der Rastschiene 107 in Eingriff zu bringen.

In dem in den Figuren 6 und 6a dargestellten Zustand befindet sich ferner ein Gegenanschlag 144 der Sperrklinke 104 in Kontakt mit einem Anschlag 132 eines Anschlagselementes 103, das mit Befestigungsschrauben 136 an der Sitzschiene 102 befestigt ist. Ferner befindet sich ein Mitnehmer 143 der Sperrklinke 104, der sich nach oben hin an den Anschlag 144 anschließt, in Eingriff mit einem Eingriffsbereich 134 des Anschlagselementes 103.

Wird in dem in den Fig. 6 und 6a dargestellten Zustand des Sitzes, in dem dieser in der Memory-Position verriegelt ist, die Rückenlehne nach vorne geklappt, so spannt sich das Seil 121b des Bowdenzuges und bewegt sich in Richtung auf das hintere (rückenlehnenseitige) Sitzende.

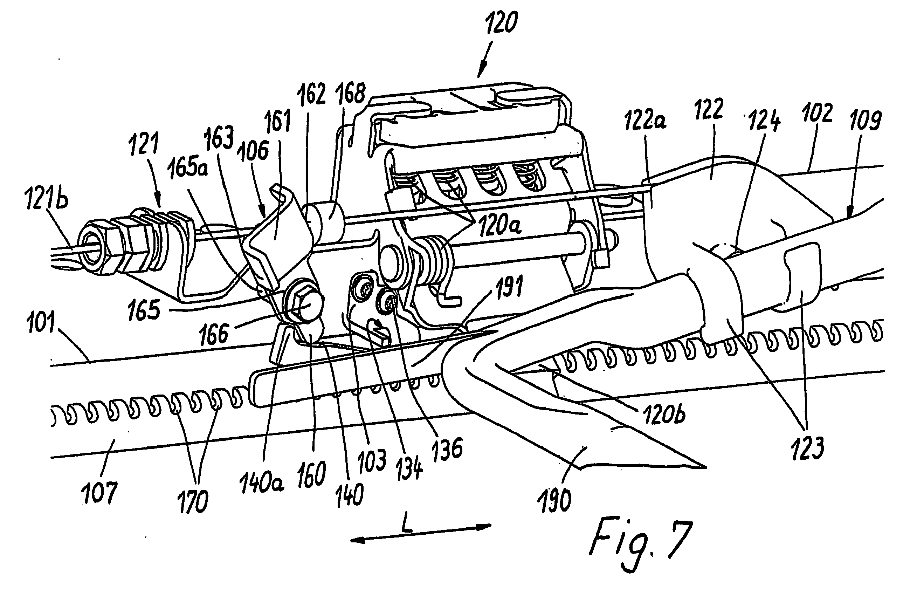

Hierdurch wird gemäß Fig. 7 zum einen der Betätigungshebel 109 über das Getriebeteil 122 sowie die Arme 123 entgegen dem Uhrzeigersinn verschwenkt, wobei er auf das Betätigungselement 120b einwirkt und die Feststellvorrichtung 120 entriegelt. Zum anderen bewegt sich der mit dem Seil 121b verquetschte Seilnippel 168 in Richtung des hinteren Sitzendes und wirkt dabei auf den Anschlag 162 im oberen Abschnitt 161 des Schalthebels 106 ein. Dabei wird der Schalthebel 106 entgegen dem Uhrzeigersinn verschwenkt, wobei dessen Betätigungsabschnitt 160 von der zugeordneten Betätigungsfläche 140 der Sperrklinke 104 abgehoben wird. Diese Schwenkbewegung des Schalthebels 106 ist möglich, da dieser nicht mehr durch den Hebelfortsatz 191 blockiert wird, der ja gemeinsam mit dem Betätigungshebel 109 nach unten verschwenkt wurde. Dadurch, daß der Schalthebel 106 die Sperrklinke 104 freigegeben hat, verschwenkt diese nun aufgrund der Wirkung der Druckfeder 400 (vergl. Fig. 6a) um den Lagerzapfen 155 des Gleiters 105, bis der Rasthaken 141 in eine Öffnung 170 der Rastschiene 107 eingreift. Hierbei wird die Sperrklinke 104 und somit insgesamt die Memory-Einrichtung verriegelt.

Die Schwenkbewegung der Sperrklinke 104 hat zudem die Folge, daß der Mitnehmer 143 der Sperrklinke 104 sowie der Eingriffsbereich 134 des Anschlagselementes 103 außer Eingriff geraten. Dies ist erforderlich, um das Sitzgestell verschieben zu können, da anderenfalls eine Bewegung des Sitzes durch die verriegelte Memory-Einrichtung blockiert würde.

Der Seilnippel 168 dient dabei hier als Sperrmittel, welches bei vorgeklappter Rückenlehne derart auf den Schalthebel 106 einwirkt, daß die Sperrklinke 104 nicht mittels des Schalthebels 106 entriegelt werden kann.

Die Anordnung ist derart ausgelegt, daß beim Vorklappen der Rückenlehne der Rasthaken 141 unter der Wirkung der Druckfeder 400 bereits in eine Rastöffnung 170 eingreifen kann, bevor die Feststellvorrichtung 120 soweit entriegelt ist, daß die Sitzschiene 102 bezüglich der karosseriefesten Schiene 101 verschiebbar ist. Hierdurch wird eine zuverlässige Speicherung der aktuellen Sitzlängsposition als Memory-Position gewährleistet. Sofern allerdings der Rasthaken 141 nicht unmittelbar in eine Rastöffnung 170 eingreifen kann, weil der Sitz derart positioniert ist, daß der Rasthaken 141 unter der Wirkung der Druckfeder 400 auf einem Steg zwischen zwei Rastöffnungen 170 aufschlägt, dann rastet der Rasthaken 141 erst nach einer geringfügigen Verschiebung des Sitzgestells in Sitzlängsrichtung L in die nächste Rastöffnung 170 ein, die er passiert. In einem solchen Fall ergibt sich also eine geringfügige Abweichung zwischen der Sitzlängsposition beim Vorklappen der Rückenlehne und der anschließend gespeicherten Memory-Position.

In dem in Fig. 7 gezeigten Zustand, der durch das Vorklappen der Rückenlehne erreicht wurde, kann das Sitzgestell nun mit vorgeklappter Rückenlehne in Sitzlängsrichtung L nach vorne verschoben werden, um den Einstieg eines Passagiers oder das Einschieben eines Gegenstandes in den Fond eines Kraftfahrzeugs zu erleichtern.

Wird der Sitz dann mit vorgeklappter Rückenlehne wieder nach hinten bewegt, so wird er spätestens in der durch die Sperrklinke 104 definierten Memory-Position automatisch angehalten. Denn beim Erreichen der Memory-Position gerät der Anschlag 132 des Sitzgestells mit dem Anschlag 144 der Memory-Einrichtung in Kontakt, wodurch eine weitere Bewegung des Sitzgestelles nach hinten verhindert wird.

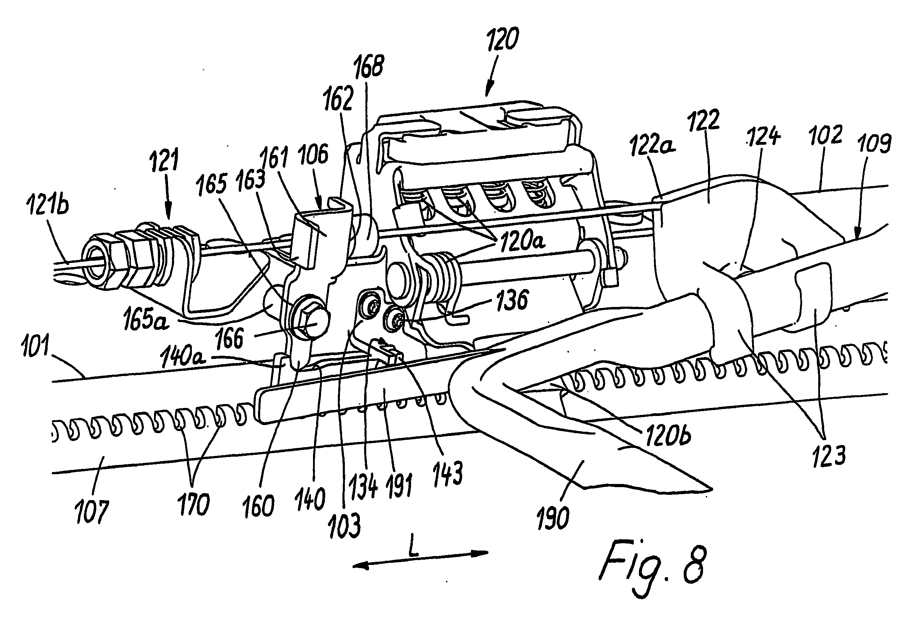

Wird sodann die Rückenlehne wieder in ihre Funktionsposition geklappt, dann löst sich die Spannung des Seiles 121b, und der Schalthebel 106 sowie der Betätigungshebel 109 mit dem daran befestigten Fortsatz 191 kehren zurück in die in den Fig. 6 und 6a dargestellte Lage. Wird sodann der Betätigungshebel 109 entgegen dem Uhrzeigersinn verschwenkt, um die Feststellvorrichtung 120 zu entriegeln, so stellt sich der in Fig. 8 gezeigte Zustand ein.

Beim manuellen Verschwenken des Betätigungshebels 109 mittels eines hierfür vorgesehenen Betätigungsgriffes wird zwar die Feststellvorrichtung 120 über das Betätigungselement 120b entriegelt, so daß das Sitzgestell in Sitzlängsrichtung L auf der karosseriefesten Schiene 101 bewegt werden kann; jedoch bleibt hierbei - im Unterschied zu einem Vorklappen der Rückenlehne - der Schalthebel 106 in seiner senkrechten Position, in der dessen Betätigungsabschnitt 160 vertikal auf die Betätigungsfläche 140 einwirkt. Hierdurch wird verhindert, daß die Sperrklinke 104 unter der Wirkung der Druckfeder 400 verriegelt wird.

Wegen des gemäß Fig. 8 nach unten verschwenkten Hebelfortsatzes 191, der dementsprechend nicht an dem zugeordneten Anschlag 163 des Schalthebels 106 anliegt, muß die vertikale Stellung des Schalthebels 106 beispielsweise durch eine geeignete Ausbildung der Betätigungsfläche 140 der Sperrklinke 104 gesichert werden. Die Betätigungsfläche 140 kann hierzu derart gekrümmt sein, daß sie unter der Wirkung der Druckfeder 400 der Sperrklinke 104 auf den Betätigungsabschnitt 160 des Schalthebels 106 kein Moment ausübt, das eine Schwenkbewegung des Schalthebels 106 entgegen dem Uhrzeigersinn zur Folge hätte. Mit anderen Worten ausgedrückt, muß das Zusammenspiel der Betätigungsfläche 140 der Sperrklinke 104 mit dem Betätigungsabschnitt 160 des Schalthebels 106 derart ausgelegt sein, daß durch die mittels der Druckfeder 400 von der Sperrklinke 104 her eingeleiteten Kräfte keine Schwenkbewegung des Schalthebels 106 entgegen dem Uhrzeigersinn ausgelöst wird. Eine Schwenkbewegung des Schalthebels 106 im Uhrzeigersinn wird demgegenüber durch den Seilnippel 168 blockiert.

Alternativ kann die senkrechte Stellung des Schalthebels 106 - wie bereits oben erwähnt - auch mittels eines geeigneten Federelementes oder durch hinreichend große Reibungskräfte gesichert werden.

Zusammenfassend führt die Betätigung des Betätigungshebels 109 in der Memory-Position des Sitzes (bei nicht vorgeklappter Rückenlehne) dazu, daß einerseits die Feststellvorrichtung 120 entriegelt wird, während gleichzeitig die Sperrklinke 104 und somit die Memory-Einrichtung insgesamt in dem entriegelten Zustand verbleibt, der bereits vor dem Verschwenken des Betätigungshebels 109 bestand, vergl.

Figuren 6 und 6a. Außerdem greift der Mitnehmer 143 der Memory-Einrichtung in den Eingriffsbereich 134 des sitzschienenseitigen Anschlagselementes 103 ein.

In diesem Zustand führt eine Bewegung des Sitzgestelles in Sitzlängsrichtung L dazu, daß gleichzeitig die Sperrklinke 140 mitgenommen wird, so daß beim Verschieben des Sitzes zugleich auch eine neue Memory-Position eingestellt wird. Die neu eingestellte Memory-Position, die der durch Verschiebung des Sitzgestelles neu eingestellten Sitzlängsposition entspricht, wird jedoch nicht schon dann verriegelt, wenn schließlich der Betätigungshebel 109 losgelassen wird. Denn dies hat gemäß den Figuren 6 und 6a zunächst nur zur Folge, daß die Feststellvorrichtung 120 verriegelt wird und somit die Sitzschiene 102 bezüglich der karosseriefesten Schiene 101 arretiert ist. Eine Verriegelung der Memory-Einrichtung erfolgt demgegenüber gemäß Fig. 7 erst dann, wenn in der neuen Sitzlängsposition die Sitzlehne vorgeklappt wird. Sonach wird bei dem vorliegenden Ausführungsbeispiel die Memory-Einrichtung immer nur dann verriegelt, wenn der Sitz mit vorgeklappter Rückenlehne im Rahmen der Easy-Entry-Funktion nach vorne bewegt wird.

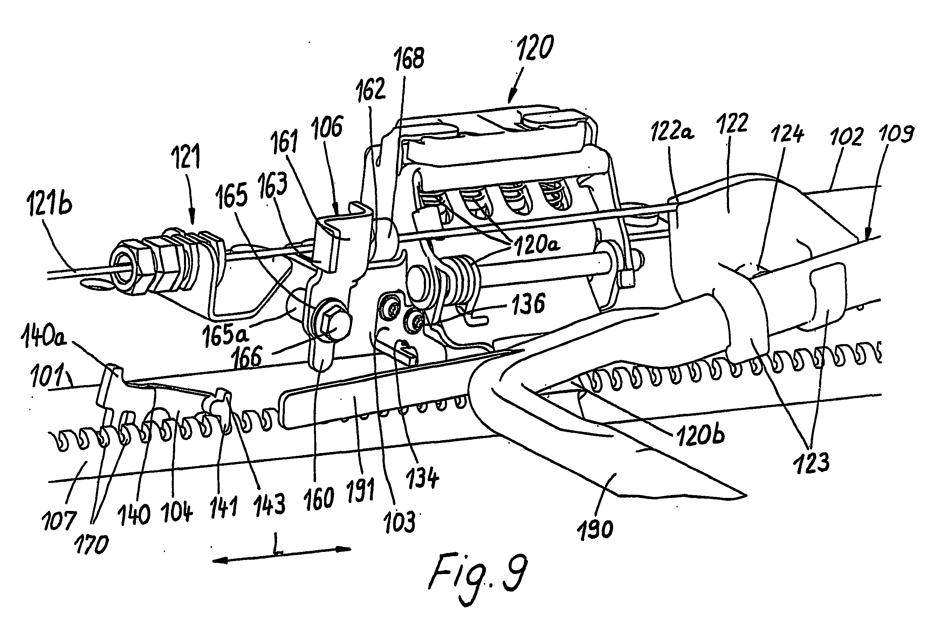

In Fig. 9 ist das Sitzgestell gezeigt, nachdem es zunächst mit vorgeklappter Rückenlehne in Sitzlängsrichtung L nach vorne verschoben wurde, wobei die Sperrklinke 104 verriegelt in der ursprünglichen Sitzposition zurückgelassen worden ist, und nachdem anschließend die Rückenlehne wieder in ihre Funktionsposition geklappt wurde. Außerdem ist der Betätigungshebel 109 derart verschwenkt, daß die Feststellvorrichtung 120 entriegelt ist und das Sitzgestell in Sitzlängsrichtung wahlweise nach vorne oder nach hinten verstellt werden kann. In jeder Sitzlängsposition, die hierbei erreicht wird, kann das Sitzgestell mittels der Feststellvorrichtung 120 bezüglich der karosseriefesten Schiene 1 arretiert werden, indem der Betätigungshebel 109 losgelassen wird.

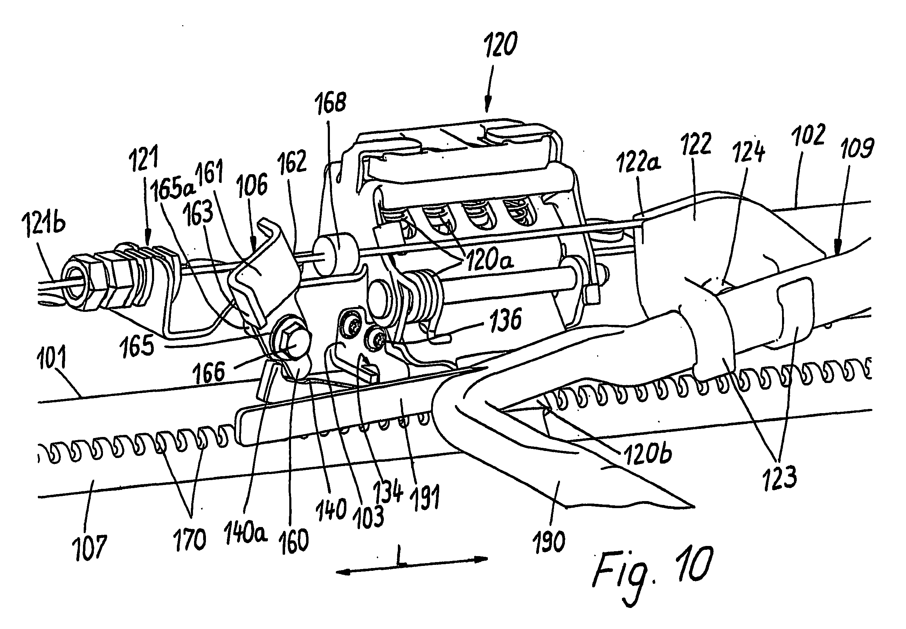

Fig. 10 zeigt schließlich den Zustand des Sitzgestells, wenn dieses mit aufgerichteter Rückenlehne bis in die Memory-Position zurückgefahren wird. Hierbei schlägt der Schalthebel 106 mit seinem Betätigungsabschnitt 160 an einem Vorsprung 140a an, der von der Betätigungsfläche 140 der Sperrklinke 104 vertikal nach oben absteht. Dies ist darauf zurückzuführen, daß sich die Sperrklinke 104 in dem verriegelten Zustand befindet, in dem sie mit ihrem Rasthaken 141 (vergl. Fig. 6a) in eine Rastöffnung 170 der Rastschiene 107 eingreift. Durch die hiermit verbundene Schrägstellung der Betätigungsfläche 140 der Sperrklinke 104 übt diese auf den Betätigungsabschnitt 160 des Schalthebels 106 ein Drehmoment mit einer Komponente parallel zur Sitzlängsrichtung L aus. Als Folge davon wird der Schalthebel 106 entgegen dem Uhrzeigersinn verschwenkt und dessen Betätigungsabschnitt 160 gerät in Anschlag mit dem Vorsprung 140a der Sperrklinke 104. Dies bewirkt, daß die Sperrklinke 104 weiterhin verriegelt bleibt, wenn das Sitzuntergestell die in Fig. 10 gezeigte Memory-Position erreicht.

Zusammenfassend wirkt demnach die Betätigungsfläche 140 im verriegelten Zustand der Sperrklinke 104 derart mit dem Betätigungsabschnitt 160 des Schalthebels 106 zusammen, daß dieser verschwenkt wird, wenn der Sitz mit aufgerichteter Rückenlehne in die Memory-Position geschoben wird, wodurch eine Entriegelung der Sperrklinke 104 verhindert wird. (Wenn der Sitz mit vorgeklappter Rückenlehne nach hinten in die Memory-Position geschoben wird, dann ist der Schalthebel 106 aufgrund der Wirkung des Seilnippels 168 ohnehin verschwenkt, vergl. Fig. 7, so daß auch in diesem Fall keine Entriegelung der Memory-Einrichtung erfolgen kann.) Andererseits wirken die Betätigungsfläche 140 der Sperrklinke 104 und der Betätigungsabschnitt 160 des Schalthebels 106 im entriegelten Zustand der Sperrklinke 104, vergl. Fig. 6, derart zusammen, daß die Sperrklinke 104 entriegelt bleibt, wie weiter oben anhand Fig. 6 näher ausgeführt wurde.

Wegen des verriegelten Zustandes der Sperrklinke 104 wird das Sitzgestell beim Erreichen der Memory-Position automatisch angehalten, wenn der Anschlag 132 des sitzgestellseitigen Anschlagselementes 103 mit dem Gegenanschlag 144 der Memory-Einrichtung (vergl. Fig. 6a) auf Block fährt.

Wird dann in der Memory-Position der Betätigungshebel 109 losgelassen, so wird dieser unter der Wirkung der Federanordnung 120a der Feststellvorrichtung 120 im Uhrzeigersinn verschwenkt, bis die Feststellvorrichtung 120 wieder verriegelt ist. Gleichzeitig wird durch den Fortsatz 191 des Betätigungshebels 109, der auf den abgewinkelten Anschlag 163 im oberen Abschnitt 161 des Schalthebels 106 einwirkt, der Schalthebel 106 im Uhrzeigersinn in seine senkrechte Stellung verschwenkt, wobei der Schalthebel 106 mit seinem Betätigungsabschnitt 160 auf die Betätigungsfläche 140 der Sperrklinke 104 einwirkt und diese (entgegen der Wirkung der Druckfeder 400) entriegelt (was eine entsprechende Auslegung der Federanordnung 120a erfordert).

Der Sitz befindet sich dann wieder in dem anhand der Figuren 6 und 6a erläuterten Zustand mit hochgeklappter Rückenlehne in der Memory-Position.

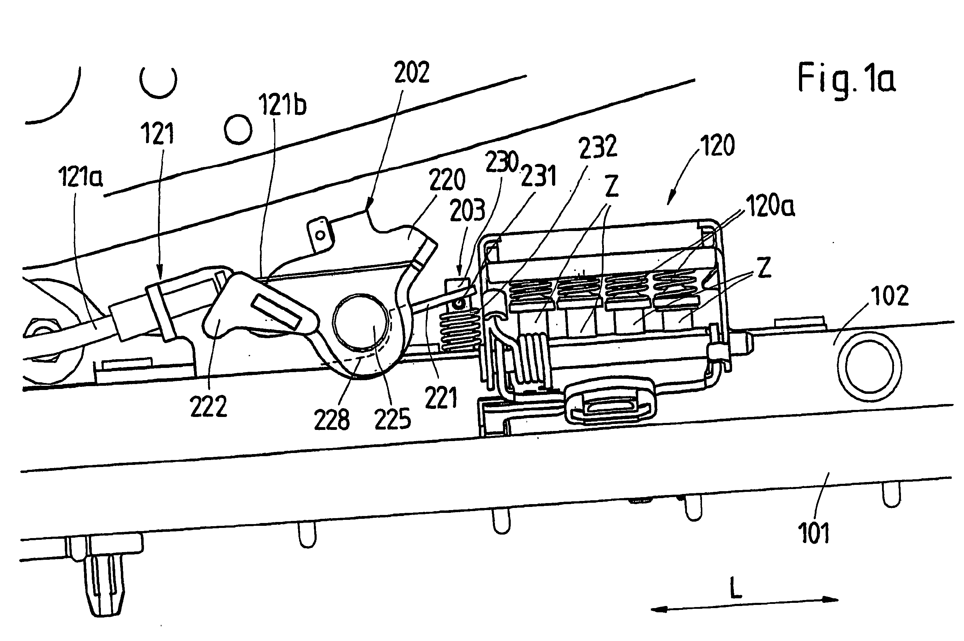

Es wir nun anhand der Figuren 1a bis 3 eine erfindungsgemäße Weiterbildung des bekannten, vorstehend anhand der Figuren 6 bis 11 beschriebenen Kraftfahrzeugsitzes erläutert werden. Dabei stimmen der in den Figuren 6 bis 11 gezeigte Kraftfahrzeugsitz bzw. dessen Sitzgestell hinsichtlich der Ausbildung der Schienenlängsführung 101, 102, hinsichtlich der Ausbildung der Feststellvorrichtung 120 sowie hinsichtlich der Ausbildung der Memory-Einrichtung 104, 105, 107 mit dem anhand der Figuren 6 bis 11 beschriebenen Fahrzeugsitz im Wesentlichen überein. Auf diese Merkmale wird daher im Folgenden nicht näher eingegangen werden. Stattdessen wird diesbezüglich auf die vorangehenden Erläuterungen zu den Figuren 6 bis 11 verwiesen, wobei durch Verwendung übereinstimmender Bezugszeichen für einander entsprechende Bauteile in den Figuren 1a bis 3 einerseits und in den Figuren 6 bis 11 andererseits die erforderlichen Bezüge hergestellt sind.

Die wesentlichen, charakteristischen Merkmale des in den Figuren 1a bis 3 dargestellten Ausführungsbeispiels der Erfindung liegen in der Ausbildung eines Mitnehmers und eines zugeordneten Sperrelementes, die eine automatische Neueinstellung der Memory-Position ermöglichen, wenn der Fahrzeugsitz mit hochgeklappter Rückenlehne (Rückenlehne in Gebrauchsposition) verstellt wird und die eine Neueinstellung der Memory-Position verhindern, wenn der Fahrzeugsitz zur Ausübung der Easy-Entry-Funktion mit auf die Sitzfläche vorgeklappter Rückenlehne verschoben wird. Diese beiden Funktionsgruppen werden nachfolgend anhand der Figuren 1a bis 3 näher beschrieben werden.

In Figur 1a ist in perspektivischer Ansicht eine Sitzlängsführung 101, 102 bestehend aus einer karosseriefest anzuordnende Unterschiene 101 sowie einer das Sitzgestell tragenden Oberschiene 102 dargestellt. Diese Längsführung 101, 102 ermöglicht eine Einstellung der Sitzlängsposition (Lage des Sitzgestells in Sitzlängsrichtung L).

Zur Verriegelung einer zuvor eingestellten Sitzlängsposition ist eine Feststellvorrichtung 120 mit elastisch vorgespannten Sperrzähnen Z vorgesehen, die an der sitzseitigen Oberschiene 102 (Sitzschiene) angeordnet ist und deren Sperrzähne Z in zugeordnete Rastöffnungen der karosseriefesten Unterschiene eingreifen können, um die beiden Schienen 101, 102 zu verriegeln. Durch die elastische Vorbelastung der Sperrzähne Z in Richtung auf die zugeordneten Rastöffnungen hat die Feststellvorrichtung 120 die Tendenz, die beiden Schienen 101, 102 miteinander zu verriegeln, sofern diese nicht durch Einwirkung auf ein hierfür vorgesehenes Betätigungselement 120b (vergleiche Figuren 7 bis 10) entriegelt wird. Diese Einwirkung kann - wie vorstehend anhand der Figuren 6 bis 11 bereits dargelegt - einerseits durch eine unmittelbare Entriegelung der Feststellvorrichtung über einen geeigneten Betätigungshebel erfolgen oder mittelbar durch Vorklappen der Rückenlehne zum Auslösen der Easy-Entry-Funktion.

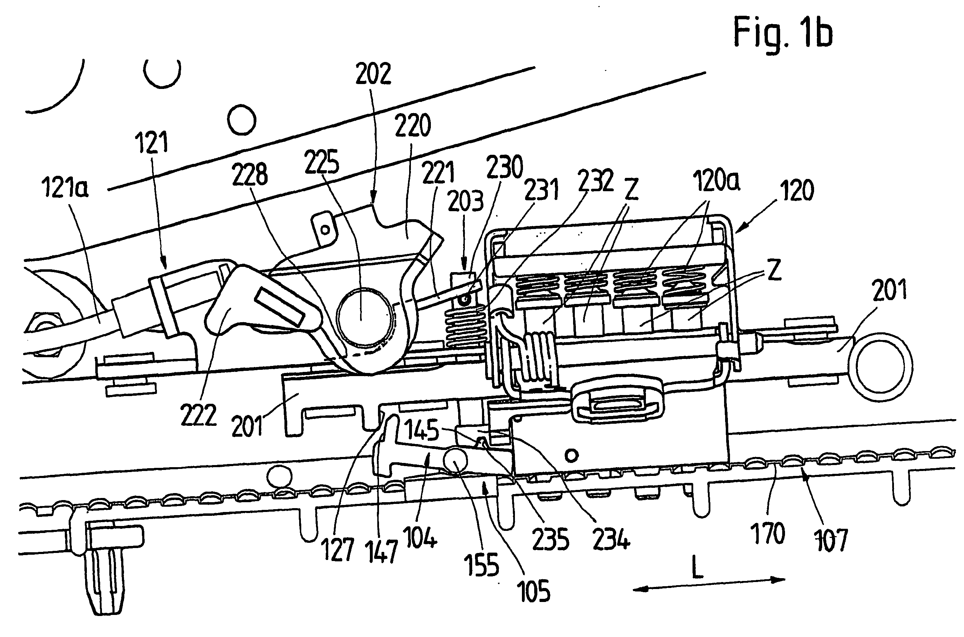

Weiterhin sind anhand der Figur 1a und insbesondere der Figur 1b, in der die Schienen 101, 102 nicht mit dargestellt sind, die wesentlichen Bestandteile einer Memory-Einrichtung 104, 105, 107 erkennbar, nämlich ein Gleiter 105, eine schwenkbar an dem Gleiter 105 angeordnete Sperrklinke 104 sowie eine mit Rastöffnungen 170 versehene Rastschiene 107, in die ein Rasthaken 141 der Sperrklinke 104 zur Verriegelung einer zuvor eingestellten Memory-Position eingreifen kann. Auch diesbezüglich wird für nähere Erläuterungen auf die Ausführungen zu den Figuren 6 bis 11 verwiesen.

In den Figuren 1a und 1b ist ein Ausschnitt der erfindungsgemäß ausgebildeten Sitzgestells in einem Zustand dargestellt, in dem der Sitz bei hochgeklappter (in seiner Gebrauchsposition befindlicher) Rückenlehne mittels der Feststellvorrichtung 120 in einer Memory-Position verriegelt ist.

In diesem Zustand wirkt auf die Sperrklinke 104 der Memory-Einrichtung ein Niederhalter in Form eines Mitnehmers 203 derart ein, dass die Sperrklinke 104 mit ihrem Rasthaken 141 aus der Rastschiene 107 ausgehoben ist. Der Mitnehmer 203 ist längsverschieblich an der Sitzschiene 102 bzw. einem an der Sitzschiene 102 befestigten Halteteil 201 angeordnet und umfaßt einen längserstreckten Grundkörper 230, an dessen unterem, der Sperrklinke 104 zugewandten Ende ein mit einer Mitnahmeöffnung 235 versehenes Mitnahmelement 234 ausgebildet bzw. befestigt ist. Dieser Mitnehmer 203 ist mittels eines elastischen Elementes 232 in Form einer Druckfeder (Rückstellfeder), die sich einerseits an dem Halteteil 201 und andererseits an einem von dem Grundkörper 230 des Mitnehmers 203 abstehenden Vorsprung 231 abstützt, derart in einer Richtung weg von der Sperrklinke 104 vorgespannt, dass er die Tendenz hat, von der Sperrklinke 104 abzuheben. Dies wird jedoch verhindert durch ein Sperrelement 221 am Grundkörper 220 eines um eine Achse 225 schwenkbar gelagerten Hebels 202, der mittels eines Federelementes 228 in Form einer Drehfeder derart in Richtung auf den Vorsprung 231 des Mitnehmers 203 vorgespannt ist, dass das Sperrelement 221 den Mitnehmer entgegen der Wirkung des am Mitnehmer vorgesehenen elastischen Elementes 232 gegen die Sperrklinke drückt, so dass der Rasthaken 141 der Sperrklinke 104 aus der Rastschiene 107 ausgehoben ist. Dadurch greift gleichzeitig ein als Rastnase ausgebildeter Vorsprung 145 der Sperrklinke 104 in die Mitnahmeöffnung 235 des Mitnehmers 203 ein.

Dies wird dadurch erreicht, dass das mittels der Drehfeder 228 vorgespannte Sperrelement 221 auf den Mitnehmer 203 eine Kraft in Richtung auf die Sperrklinke 204 ausübt, die größer ist als die aufgrund der Druckfeder 232 in entgegengesetzter Richtung wirkende Kraft. Somit ist der Rasthaken 141 aus den Rastöffnungen 170 der Rastschiene 107 ausgehoben und die Sperrklinke 104 kann bei einer Verschiebung des Sitzes mit hochgeklappter Rückenlehne in Sitzlängsrichtung L mitgenommen werden, so dass die Memory-Position bei der Verschiebung des Sitzes gleichzeitig neu eingestellt wird.

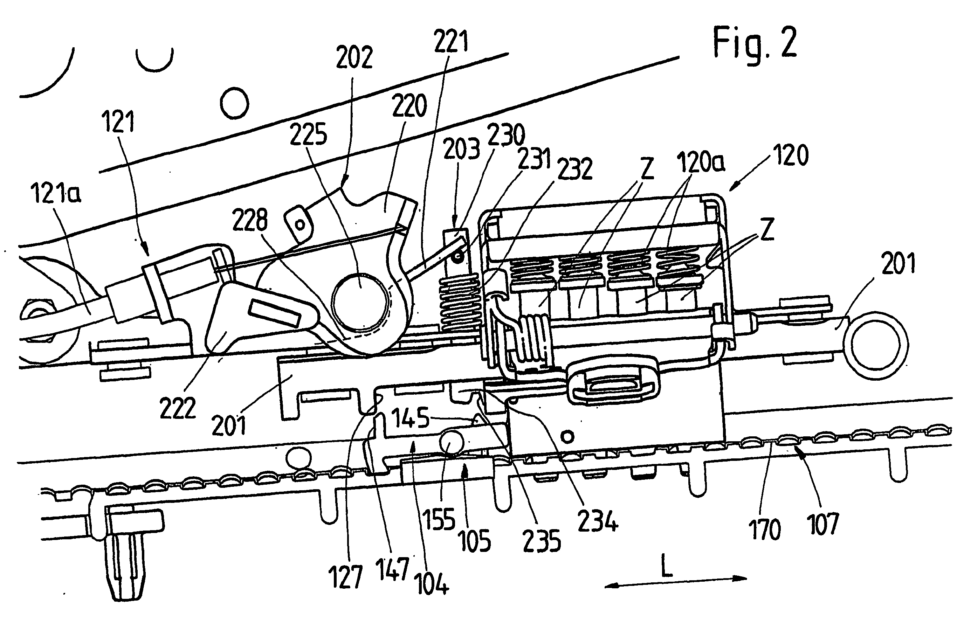

Wird in dem in den Figuren 1a und 1b gezeigten Zustand des Sitzes die Rückenlehne nach vorne in Richtung auf die Sitzfläche geklappt, so wird hierdurch die Seele 121a eines Bowdenzuges 121a, 121b gespannt, die mit einem Ende mit der Sitzlehne und mit dem anderen Ende mit dem Grundkörper 220 des schwenkbar gelagerten Hebels 202 verbunden ist. Hierdurch wird der Hebel 202 derart verschwenkt, dass das Sperrelement 221 von dem Vorsprung 231 des Mitnehmers 203 und somit der Mitnehmer 203 unter der Wirkung der Druckfeder 232 von der Sperrklinke 104 abhebt. Da die Sperrklinke 104 - wie anhand der Figuren 6 bis 10 erläutert - wiederum mittels eines Federelementes derart unter Vorspannung steht, dass der Rasthaken 141 der Sperrklinke 104 die Tendenz hat, in eine der Rastöffnungen 170 der Rastschiene 107 einzugreifen, wird die Sperrklinke 104 in ihrer aktuellen Position verriegelt. Dies entspricht einer Verriegelung der Memory-Einrichtung 104, 105, 107 insgesamt. Dieser Zustand ist in Figur 2 dargestellt.

Der Mechanismus ist derart ausgelegt, dass die Verriegelung der Memory-Einrichtung 104, 105, 107 bei einem Vorklappen der Rückenlehne aus einer vertikalen Gebrauchsposition um etwa 20° bis 40° erfolgt. Die Verriegelung der Memory-Einrichtung geschieht somit schon in der ersten Stufe (Phase) der Aktivierung des Easy-Entry-Mechanismus durch Vorklappen der Rückenlehne in Richtung auf die Sitzfläche. Die Feststellvorrichtung 120 ist in dieser ersten Phase des Vorklappens der Rückenlehne nach wie vor verriegelt, so dass noch keine Verschiebung des Sitzes in Längsrichtung L erfolgen kann.

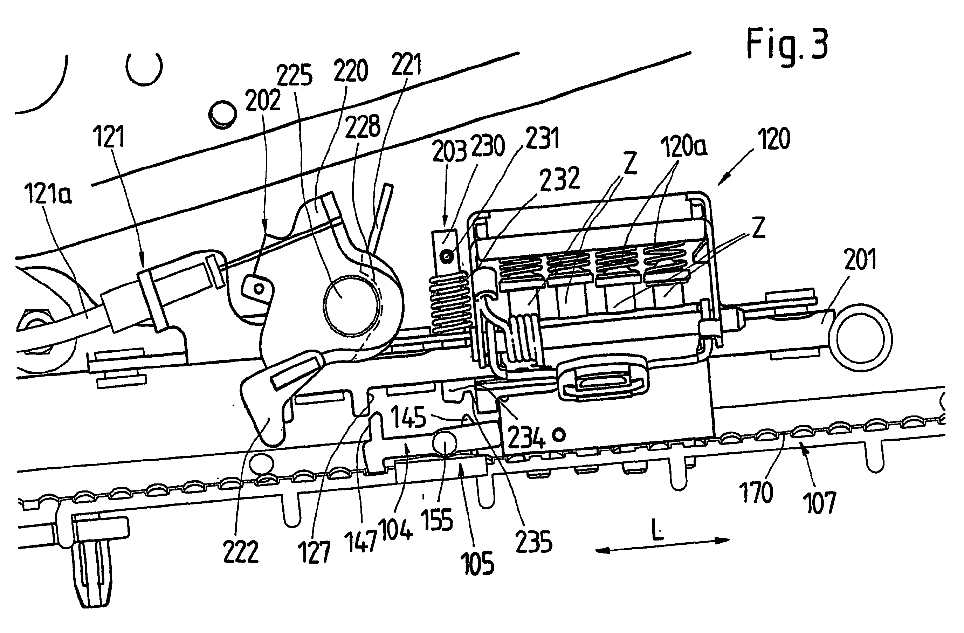

Dies wird erst bei einem weiteren Vorklappen der Rückenlehne ermöglicht, wobei gemäß Figur 3 ein an dem schwenkbar gelagerten Hebel 202 vorgesehener Betätigungsabschnitt 222 auf den - in den Figuren 7 bis 10 dargestellten - Betätigungshebel 109 der Feststellvorrichtung 120 einwirkt, so dass die Feststellvorrichtung 120 entriegelt wird. Dies ermöglicht dann eine Verschiebung des Sitzes in Längsrichtung L.

Demnach ist eine Verschiebung des Sitzes in Längsrichtung L bei einem Vorklappen der Rückenlehne zum Ausführen der Easy-Entry-Funktion erst möglich, nachdem die Sperrklinke 104 der Memory-Einrichtung 104, 105, 107 verriegelt worden ist. Somit ist die beim Vorklappen der Rückenlehne bestehende Memory-Position zuverlässig fixiert, bevor eine Verschiebung des Sitzes mit vorgeklappter Rückenlehne erfolgen kann. Diese Memory-Position kann dann beim anschließenden Zurückfahren des Sitzes wieder aufgefunden werden, wie oben anhand der Figuren 6 bis 10 erläutert. Es wird also verhindert, dass beim Ausüben der Easy-Entry-Funktion eine Verschiebung des Sitzes mit vorgeklappter Rückenlehne erfolgen kann bevor die Ausgangsposition des Sitzes als Memory-Position fixiert ist.

Dabei ist die gesamte Anordnung wegen der Verschieblichkeit des Mitnehmers 203 im Wesentlichen senkrecht zur Erstrekkungsrichtung L der Sitzlängsführung sowie wegen der schwenkbaren Lagerung des Hebels 202 mit dem Sperrelement 221 sehr kompakt und befindet sich im wesentlichen in dem von den Schienen 101, 102 der Schienenlängsführung umschlossenen Raum bzw. ragt lediglich nach oben aus diesem hinaus.

Wird gemäß den Figuren 1a bis 3 die Rückenlehne des Sitzes vorgeklappt, um die Easy-Entry-Funktion auszulösen, so kann das Problem auftreten, dass der Rasthaken 141 der Sperrklinke 104 nicht in eine der Rastöffnungen 170 der Rastschiene 107 eingreifen kann. Denn die Feststellvorrichtung 120 ermöglicht in der Regel eine stufenlose Einstellung der Sitzlängsposition, vergleiche etwa die in der DE 299 10 720 U1 beschriebene Feststellvorrichtung, während vorliegend für die Verriegelung der Memory-Position eine feinstufige (also keine stufenlose) Verrastung (unter Verwendung der Rastschiene 107 mit Rastöffnungen 170) vorgesehen ist. Es kann also der Fall auftreten, dass beim Vorklappen der Rückenlehne der Rasthaken 141 der Sperrklinke 104 nicht in eine Rastöffnung 170 eingreifen kann, sondern auf deren Rand aufsteht. Hierdurch ist zunächst keine Verriegelung der Memory-Position möglich.

Wird nun bei vorgeklappter Rückenlehne das Sitzgestell und somit auch die Sitzschiene 102 aus der Memory-Position heraus in Sitzlängsrichtung nach vorne verschoben (Easy-Entry), so wird hierbei die Sperrklinke 104 zusammen mit dem Gleiter 105 noch ein Stück weit mitgenommen, da ein an der Sitzschiene 102 vorgesehener Anschlag 127 auf einen zugeordneten sperrklinkenseitigen Anschlag 147 einwirkt. Die Sperrklinke 104 und der Gleiter 105 werden dabei nur soweit mitgenommen, bis der Rasthaken 141 der Sperrklinke 104 unter der Wirkung des an der Sperrklinke vorgesehenen Federelementes vollständig in die nächstgelegene Rastöffnung 170 der Rastschiene 107 eingreifen kann. Die Sperrklinke 104 und somit die Verriegelungsvorrichtung 104, 107 der Memory-Einrichtung 104, 105, 107 insgesamt sind dann in derjenigen Memory-Position verriegelt, die der Sitzlängsposition am nächsten liegt, in der die Feststellvorrichtung 120 vor dem Vorklappen der Rückenlehne verriegelt war.

In dem Verriegelungszustand, in dem der Rasthaken 141 der Sperrklinke 104 in eine Rastöffnung 170 der Rastschiene 107 eingreift, befindet sich der sperrklinkenseitige Anschlag 147 unterhalb des sitzschienenseitigen Anschlages 127, so dass diese Anschläge 127, 147 nicht mehr miteinander in Wirkverbindung treten können. Der Sitz kann dann weiter in Sitzlängsrichtung L nach vorne verschoben werden, wobei die Sperrklinke 104 und der Gleiter 105 in der zuvor verriegelten Memory-Position verbleiben.

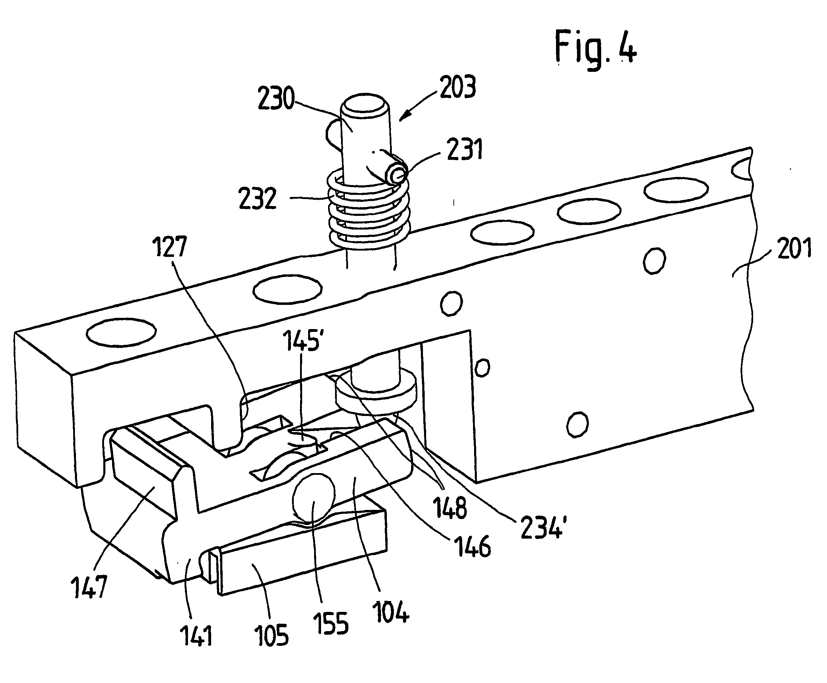

In Figur 4 ist eine Abwwnalung des Ausführungsbeispiels aus den Figuren 1a bis 3 dargestellt, und zwar mit Blick auf das Anfahren der Memory-Position beim Zurückschieben des Sitzes mit in Gebrauchsposition befindlicher, also hochgeklappter Rückenlehne. Dies betrifft insbesondere den Fall, dass der Sitz nach hinten in Richtung auf die Memory-Position verschoben wird, während sich ein Fahrzeuginsasse auf dem Sitz befindet.

Wird der Sitz mit hochgeklappter Rückenlehne in die Memory-Position verschoben, nachdem er zuvor mit vorgeklappter Rückenlehne, also ohne Mitnahme der Sperrklinke 104 und des Gleiters 105 aus der Memory-Position heraus verschoben worden war, so trifft der Mitnehmer 203 beim Erreichen der Memory-Position auf die Sperrklinke 104. Dabei ist der Mitnehmer 203 wegen der in Gebrauchsposition befindlichen Rückenlehne mittels des Sperrelementes 221 (in Figur 4 nicht dargestellt) in Richtung auf die Sperrklinke 104 der Memory-Einrichtung nach unten gedrückt.

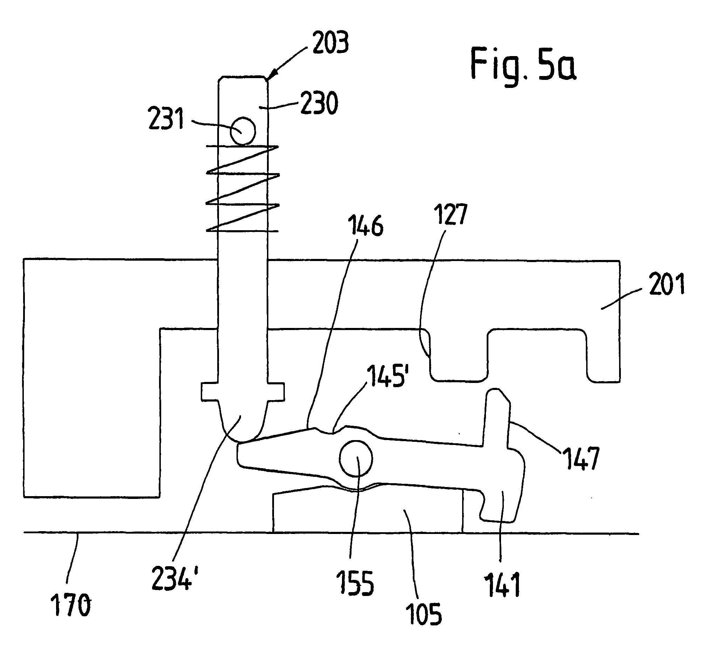

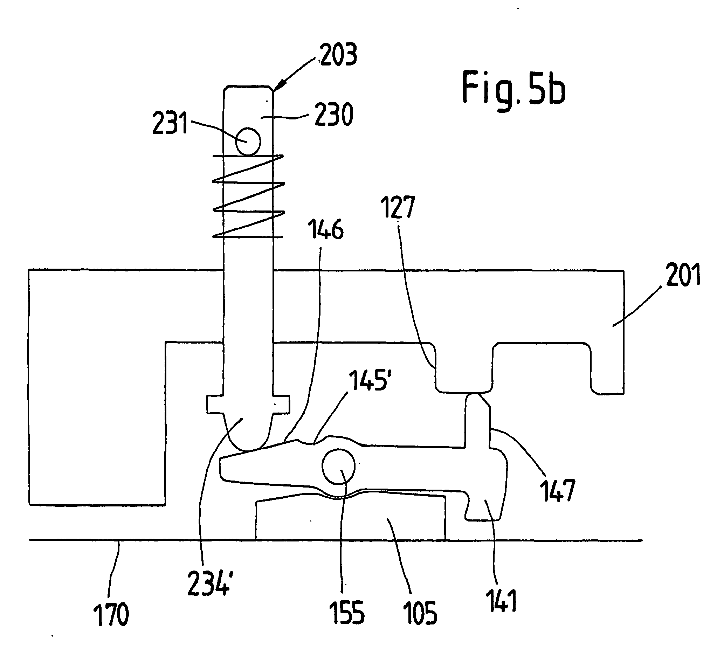

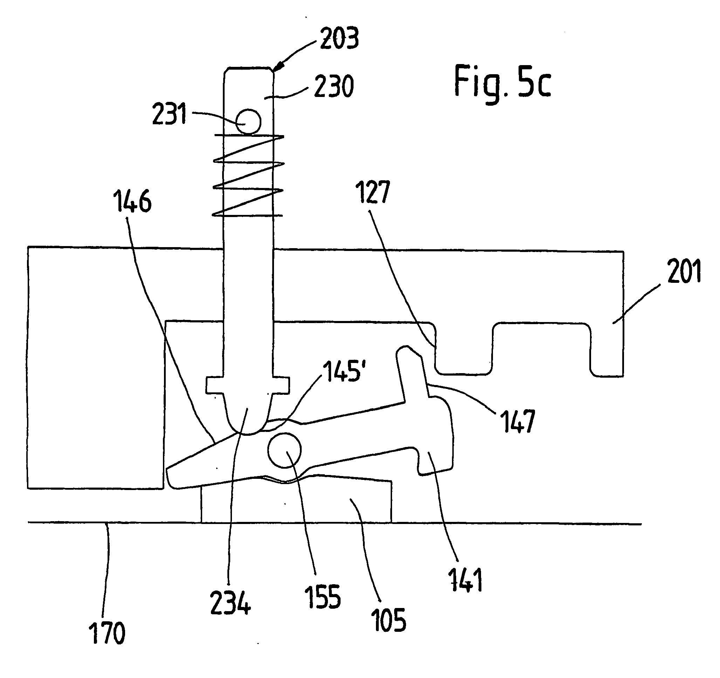

Um in diesem, in Figur 4 dargestellten Zustand, das Erreichen der tatsächlichen Memory-Position, in der der Mitnehmer 203 formschlüssig in die Sperrklinke 104 eingreift, zu ermöglichen, weist die Sperrklinke 104 eine Rampe 146 auf, auf der der untere Endabschnitt 234' des Mitnehmers 203 bis zu einer Mulde 145' der Sperrklinke 104 gleiten kann. Dies ist in den Figuren 5a bis 5c dargestellt, wobei der Mitnehmer 203 abschließend in der Memory-Position mit seinem unteren Endabschnitt 234' in die zugeordnete Mulde 145' der Sperrklinke 104 eingreift. Der untere Endabschnitt 234' des Mitnehmers 203 sowie die Mulde 145' der Sperrklinke 104 wirken dann als Anschläge, die eine Mitnahme der Sperrklinke 104 zusammen mit dem Gleiter 105 beim weiteren Verschieben des Sitzes ermöglichen.

Die Rampe 146 erstreckt sich dabei nur über einen Teil der Breite der Sperrklinke 104 (Ausdehnung senkrecht zur Sitzlängsrichtung L und zur Bewegungsrichtung des Mitnehmers 203), so daß benachbarte Bereiche 148 der Sperrklinke 104 als Anschläge wirken können, um im verriegelten Zustand der Sperrklinke 104 die Memory-Position zu definieren.

Da der Mitnehmer 203 beim Anfahren der Memory-Position mit in Gebrauchsposition befindlicher, hochgeklappter Rückenlehne in Richtung auf die Sperrklinke 104 nach unten gedrückt ist, hebt er beim anfahren der Memory-Position gleichzeitig auch den Rasthaken 141 der Sperrklinke 104 aus der zugeordneten Rastschiene 107 aus. Erst hierdurch wird die gemeinsame weitere Verstellung des Sitzes einerseits sowie von Sperrklinke 104 und Gleiter 105 andererseits ermöglicht.

Durch das Zusammenwirken des sitzgestellseitigen Anschlages 127 mit dem sperrklinkenseitigen Anschlag 147 beim Anfahren der Memory-Position, wobei sich der sperrklinkenseitige Anschlag 147 der Verriegelungsvorrichtung (Sperrklinke 104) in vertikaler Richtung (parallel zur Bewegungsrichtung des Mitnehmers 203) an dem sitzgestellseitigen Anschlag 127 abstützt, während der Mitnehmer 203 entlang der Rampe 146 gleitet, ist das Ausheben der Sperrklinke 104 aus der zugeordneten Rastschiene 107 erst möglich, nachdem der sperrklinkenseitige Anschlag 147 den sitzgestellseitigen Anschlag 127 passiert hat. Der Mitnehmer 203 greift dann in die Mulde 145' ein. Da die Anschläge 127, 147 zunächst ein Verschwenken der Sperrklinke 104 verhindern und die Rampe 147 in Sitzlängsrichtung geneigt verläuft, wird der Mitnehmer 203 beim Befahren der Rampe 146 zunächst angehoben. Hierbei führt der (mittels der Feder 232) federnd gelagerte Mitnehmer 203 eine Ausgleichsbewegung in vertikaler Richtung durch.

Zusammenfassend ermöglicht die in den Figuren 4 bis 5c dargestellte Ausführungsform der Erfindung beim Anfahren der Memory-Position mit in Gebrauchsposition befindlicher, hochgeklappter Rückenlehne, eine automatische Mitnahme von in der Memory-Position befindlichen Teilen 104, 105 der Memory-Einrichtung, so dass beim Verstellen des Sitzes mit hochgeklappter Rückenlehne eine automatische Neueinstellung der Memory-Position erfolgen kann. Wird jedoch die Memory-Position mit auf die Sitzlehne vorgeklappter Rückenlehne angefahren, so befindet sich der Mitnehmer 203 unter der Wirkung der Druckfeder 232 in einer Position, in der er nicht auf die Sperrklinke 104 der Memory-Einrichtung 104, 105, 107 einwirken kann. Dadurch bleibt die Sperrklinke 104 zusammen mit dem Gleiter 105 in der Memory-Position verriegelt, in der der Sitz dann automatisch angehalten wird, so dass die zuvor eingestellte Memory-Position beim zurückschieben des Sitzes mit vorgeklappter Rückenlehne - wie gewünscht - wiedergefunden worden ist.

Wie insbesondere anhand Figur 4 erkennbar ist, wird durch die Rampe 146 überhaupt erst das Auffahren des Mitnehmers 203 auf die Sperrklinke 104 ermöglicht, da ansonsten der Mitnehmer 203 beim Anfahren der Memory-Position mit der Sperrklinke 104 in Anschlag geriete und nicht auf diese Auffahren könnte, um die Verriegelungsvorrichtung zu entriegeln. Mit anderen Worten ausgedrückt, wird der Niederhalter mittels der Rampe (zu der Mulde 145' hin) angehoben.

## Patentansprüche

1. Kraftfahrzeugsitz mit
- einem Sitzgestell (G),
- einer Rückenlehne (R), die schwenkbar an dem Sitzgestell (G) gelagert ist und die aus ihrer Gebrauchsposition heraus in Richtung auf eine Sitzfläche des Sitzgestelles (G) vorklappbar ist,
- einer Längsführung (101, 102), mit der das Sitzgestell (G) zur Einstellung der Sitzlängsposition in Sitzlängsrichtung (L) bewegbar ist,
- einer Feststellvorrichtung (120) zum Arretieren des Sitzgestells (G) in einer zuvor eingestellten Sitzlängsposition,
- einem Betätigungselement (120b) zum Entriegeln der Feststellvorrichtung (120), so dass das Sitzgestell (G) in Sitzlängsrichtung (L) bewegt werden kann,
- einem Koppelmechanismus, der auf das Betätigungselement (120b) einwirkt und die Feststellvorrich- tung (120) entriegelt, wenn die Rückenlehne (R) in Richtung auf die Sitzfläche vorgeklappt ist,
- einer Memory-Einrichtung (104, 105, 107), mittels der das Sitzgestell (G) bei einer Bewegung in Sitzlängsrichtung automatisch in einer einstellbaren, als Memory-Position definierten Sitzlängsposition angehalten werden kann,
- einer Verriegelungsvorrichtung (104, 107) der Memory- Einrichtung (104, 105, 107) zum Verriegeln einer eingestellten Memory-Position,
- Mitteln (202, 206), über die die Verriegelungsvorrichtung (104, 107) mit der Rückenlehne (R) gekoppelt ist,
- einen beweglich gelagerten Niederhalter (203), der in der Memory-Position des Sitzes und bei in Gebrauchsposition befindlicher Rückenlehne (R) derart auf die Memory-Einrichtung (104, 105, 107) einwirkt, dass deren Verriegelungsvorrichtung (104, 107) entriegelt ist, und
- eine Rampe (146), mit der der Niederhalter (203) beim Anfahren der Memory-Position mit in Gebrauchsposition befindlicher Rückenlehne (R) in Wirkverbindung tritt, wobei er in eine Position geführt wird, in der er derart auf die Verriegelungsvorrichtung (104, 107) einwirkt, dass diese entriegelt ist,
**dadurch gekennzeichnet,**
**dass** an der Verriegelungsvorrichtung (104, 107) ein Anschlag (147) vorgesehen ist, der beim Anfahren der Memory-Position derart mit einem sitzgestellseitigen Anschlag (127) zusammenwirkt, dass eine Entriegelung der Verriegelungsvorrichtung (104, 107) blockiert ist, bis das Sitzgestell (G) die Memory-Position erreicht hat.

2. Kraftfahrzeugsitz nach Anspruch 1, **dadurch gekennzeichnet, dass** die Rampe (146) an der Memory-Einrichtung (104, 105, 107) vorgesehen ist.

3. Kraftfahrzeugsitz nach Anspruch 1 oder 2, **dadurch gekennzeichnet, dass** der Niederhalter (203) beim Anfahren der Memory-Position auf der Rampe (146) gleitet.

4. Kraftfahrzeugsitz nach Anspruch 1 oder 2, **dadurch gekennzeichnet, dass** sich der Niederhalter (203) beim Anfahren der Memory-Position mittels Rollen oder Rädern auf der Rampe (146) bewegt.

5. Kraftfahrzeugsitz nach einem der Ansprüche 1 bis 4, **dadurch gekennzeichnet, dass** der Niederhalter (203) federelastisch gelagert ist.

6. Kraftfahrzeugsitz nach einem der Ansprüche 1 bis 5, **dadurch gekennzeichnet, dass** der Niederhalter (203) längsverschiebbar gelagert ist.

7. Kraftfahrzeugsitz nach einem der Ansprüche 1 bis 6, **dadurch gekennzeichnet, dass** der Niederhalter (203) beim Anfahren der Memory-Position mit in Gebrauchsposition befindlicher Rückenlehne (R) derart auf die Verriegelungsvorrichtung (104, 107) der Memory-Einrichtung (104, 105, 107) einwirkt, dass diese entriegelt wird.

8. Kraftfahrzeugsitz nach einem der Ansprüche 1 bis 7, **dadurch gekennzeichnet, dass** der Niederhalter (203) in der Memory-Position des Sitzgestells in eine an der Verriegelungsvorrichtung (104, 107) vorgesehene Mulde (145') eingreift.

9. Kraftfahrzeugsitz nach einem der Ansprüche 1 bis 8, **dadurch gekennzeichnet, dass** die Rampe (146) in Sitzlängsrichtung (L) geneigt verläuft.

10. Kraftfahrzeugsitz nach einem der Ansprüche 1 bis 9, **dadurch gekennzeichnet, dass** die Rampe (146) an einer in Sitzlängsrichtung (L) verschiebbaren Verriegelungseinheit (104) der Verriegelungsvorrichtung (104, 107) vorgesehen ist.

11. Kraftfahrzeugsitz nach Anspruch 10, **dadurch gekennzeichnet, dass** die Rampe (146) an einer schwenkbar gelagerten Baugruppe der Verriegelungseinheit (104) vorgesehen ist.

12. Kraftfahrzeugsitz nach Anspruch 11, **dadurch gekennzeichnet, dass** die schwenkbar gelagerte Baugruppe durch eine Sperrklinke (104) der Verriegelungseinheit (104, 105) gebildet wird.

13. Kraftfahrzeugsitz nach Anspruch 11 oder 12, **dadurch gekennzeichnet, dass** die schwenkbar gelagerte Baugruppe beim Anfahren der Memory-Position unter der Einwirkung des Niederhalters (203) zunehmend verschwenkt wird, wobei die Verriegelungsvorrichtung (104, 107) entriegelt wird.

14. Kraftfahrzeugsitz nach einem der Ansprüche 11 bis 13, **dadurch gekennzeichnet, dass** sich die Rampe (146) quer zur Sitzlängsrichtung (L) nur über einen Teil der Breite der schwenkbar gelagerten Baugruppe (104) erstreckt.

15. Kraftfahrzeugsitz nach Anspruch 10 oder 11, **dadurch gekennzeichnet, dass** der an der Verriegelungsvorrichtung (104, 107) vorgesehene Anschlag (147) an der schwenkbaren Baugruppe (104) angeordnet ist.

16. Kraftfahrzeugsitz nach einem der vorgehenden Ansprüche, **dadurch gekennzeichnet, dass** der sitzgestellseitige Anschlag (127) mit der Sitzlängsführung (101, 102) verbunden ist.

17. Kraftfahrzeugsitz nach Anspruch 16, **dadurch gekennzeichnet, dass** der sitzgestellseitige Anschlag (127) an einem an einer Sitzschiene (102) der Schienenlängsführung (101, 102) befestigten Halteteil (201) ausgebildet ist.

18. Kraftfahrzeugsitz nach einem der vorhergehenden Ansprüche, **dadurch gekennzeichnet, dass** der Niederhalter (203) als Mitnehmer dient, der in der Memory-Position des Sitzes und bei in Gebrauchsposition befindlicher Rückenlehne (R) derart auf die Memory-Einrichtung (104, 105, 107) einwirkt, dass die Memory-Position bei einer Einstellung der Sitzlängsposition gemeinsam mit dem Sitzgestell (G) verstellt wird.

19. Kraftfahrzeugsitz nach Anspruch 18, **dadurch gekennzeichnet, dass** der beweglich gelagerte Mitnehmer (203) bei in Gebrauchsposition befindlicher Rückenlehne (R) mitels eines Sperrelementes (221) in einer Stellung gehalten wird, in der er in der Memory-Position des Sitzes derart auf die Memory-Einrichtung (104, 105, 107) einwirkt, dass die Memory-Position bei einer Einstellung der Sitzlängsposition gemeinsam mit dem Sitzgestell (G) verstellt wird.

20. Kraftfahrzeugsitz nach Anspruch 19, **dadurch gekennzeichnet, dass** das Sperrelement (221) an einem Hebel (202) vorgesehen ist, der einen Betätigungsabschnitt (222) zum Entriegeln der Feststellvorrichtung (120) aufweist.

21. Kraftfahrzeugsitz nach einem der vorhergehenden Ansprüche, **dadurch gekennzeichnet, dass** die Verriegelungsvorrichtung (104, 107) eine in Sitzlängsrichtung (L) verschiebbare Verriegelungseinheit (104) aufweist, die zugleich die Memory-Position definiert.

22. Kraftfahrzeugsitz nach Anspruch 21, **dadurch gekennzeichnet, dass** der Verriegelungseinheit (104) eine Rasteinrichtung (107) zugeordnet ist, die in Sitzlängsrichtung (L) hintereinander angeordnete Raststellen (170) aufweist, an denen die Verriegelungseinheit (104) bezüglich der Rasteinrichtung (107) verriegelbar ist.

23. Kraftfahrzeugsitz nach Anspruch 22, **dadurch gekennzeichnet, dass** die Verriegelungseinheit eine schwenkbar gelagerte Sperrklinke (104) umfasst, die ein Rastelement (141) aufweist, dass an den Raststellen (170) in die Rasteinrichtung (107) einrasten kann.

24. Kraftfahrzeugsitz nach Anspruch 18 oder 19 und Anspruch 23, **dadurch gekennzeichnet, dass** der Mitnehmer (203) zum Entriegeln der Verriegelungsvorrichtung (104, 107) auf die Sperrklinke (104) einwirkt.

25. Kraftfahrzeugsitz nach Anspruch 18 oder 19 und Anspruch 23 oder 24, **dadurch gekennzeichnet, dass** an der Sperrklinke (104) ein Anschlag (145, 145') vorgesehen ist, auf den der Mitnehmer (203) einwirkt, wenn sich die Rückenlehne (R) in einer Gebrauchsposition befindet, so dass die Verriegelungseinheit (104) bei einer Einstellung der Sitzlängsposition mitgenommen wird.

26. Kraftfahrzeugsitz nach Anspruch 25, **dadurch gekennzeichnet, dass** der Anschlag (145, 145') durch einen Vorsprung (145) oder eine Vertiefung (145') gebildet wird.

27. Kraftfahrzeugsitz nach einem der Ansprüche 23 bis 26, **dadurch gekennzeichnet, daß** die Rampe (146) an der Sperrklinke (104) vorgesehen ist.

28. Kraftfahrzeugsitz nach Anspruch 18 und 21, **dadurch gekennzeichnet, dass** an der Verriegelungseinheit (104) der Memory-Einrichtung (104, 105, 107) ein Anschlag (147) vorgesehen ist, dem mindestens ein sitzgestellseitiger Anschlag (127) zugeordnet ist, der bei einer Verschiebung des Sitzgestells (G) in Sitzlängsrichtung (L) aus der Memory-Position heraus die Verriegelungseinheit (104) mitnimmt, wenn diese nicht vollständig verriegelt ist, selbst wenn der Mitnehmer (203) von der Memory-Einrichtung (104, 105, 107) abgehoben ist, und dass der sitzgestellseitige Anschlag (127, 128) nicht mehr auf die Verriegelungseinheit (104) einwirkt, sobald diese verriegelt ist.

29. Kraftfahrzeugsitz nach Anspruch 23 und 28, **dadurch gekennzeichnet, dass** der Anschlag an der Sperrklinke (104) der Verriegelungseinheit vorgesehen ist.

30. Kraftfahrzeugsitz nach Anspruch 29, **dadurch gekennzeichnet, dass** der Anschlag (147) außer Eingriff mit dem mindestens einen sitzgestellseitigen Anschlag (127) gebracht wird, wenn die Sperrklinke (104) mit ihrem Rasthaken (141) in eine zugeordnete Rastöffnung (170) einrastet.

31. Kraftfahrzeugsitz nach einem der Ansprüche 28 bis 30, **dadurch gekennzeichnet, dass** die Verriegelungseinheit (104) in Richtung auf die Rastöffnungen (170) vorgespannt ist.

32. Kraftfahrzeugsitz nach Anspruch 31, **dadurch gekennzeichnet, dass** die Verriegelungseinheit (104) automatisch in die nächstgelegene Rastöffnung (170) einrastet, wenn das Sitzgestell (G) in Sitzlängsrichtung verschoben wird und der Mitnehmer (203) von der Memory-Einrichtung (104, 105, 107) abgehoben ist.

33. Kraftfahrzeugsitz nach einem der vorhergehenden Ansprüche, **dadurch gekennzeichnet, dass** die Längsführung (101, 102) durch zwei ineinandergreifende Schienen (101, 102) gebildet wird, die zwischen sich einen Hohlraum einschließen, und dass die Baugruppen der Memory-Einrichtung (104, 105, 107) innerhalb dieses Hohlraumes angeordnet sind.

34. Kraftfahrzeugsitz nach Anspruch 33, **dadurch gekennzeichnet, dass** der sitzgestellseitige Anschlag (127) innerhalb der von den beiden Schienen (101, 102) gebildeten Hohlraumes angeordnet ist.

35. Kraftfahrzeugsitz nach einem der vorhergehenden Ansprüche, **dadurch gekennzeichnet, dass** die Rückenlehne (R) derart mit der Feststellvorrichtung (20) einerseits und mit der Verriegelungsvorrichtung (104, 107) andererseits gekoppelt ist, dass beim Vorklappen der Rückenlehne (R) in Richtung auf die Sitzfläche zunächst mittels der Verriegelungsvorrichtung (104, 107) die aktuelle Sitzlängsposition als Memory-Position verriegelt wird und danach die Feststellvorrichtung (120) entriegelt wird.

## Claims

1. Motor vehicle seat with
- a seat frame (G)
- a backrest (R) which is pivotally mounted on the seat frame (G) and which can be folded forwards from its position of use towards a seat surface of the seat frame (G),
- a longitudinal guide (101, 102) with which the seat frame (G) can be moved in the seat longitudinal direction (L) in order to adjust the longitudinal position of the seat,
- a fixing device (120) for locking the seat frame (G) in a previously adjusted seat longitudinal position,
- an actuating element (120b) for releasing the fixing device (120) so that the seat frame (G) can be moved in the seat longitudinal direction (L),
- a coupling mechanism which acts on the actuating element (120b) and releases the fixing device (120) when the backrest (R) has been folded forwards towards the seat surface,
- a memory device (104, 105, 107) by means of which the seat frame (G) during movement in the seat longitudinal direction can be stopped automatically in a settable seat longitudinal position defined as the memory position,
- a locking device (104, 107) of the memory device (104, 105, 107) for locking a set memory position, and
- means (202, 206) through which the locking device (104, 107) is coupled to the backrest (R),
- a movably mounted hold down member (203) which in the memory position of the seat and with the backrest (R) in the position of use acts on the memory device (104, 105, 107) so that its locking device is released, and
- a ramp (146) with which the hold down member (203) is brought into active connection upon approaching the memory position with the backrest (R) in the position of use, whereby it is guided into a position in which it acts on the locking device (104, 107) so that it is released,
**characterised in that**
a stop (147) is provided on the locking device (104, 107) which upon approaching the memory position cooperates with a stop (127) on the seat frame side which blocks a release of the locking device (104, 107) until the seat frame (G) has reached the memory position.

2. Motor vehicle seat according to claim 1, **characterised in that** the ramp (146) is provided on the memory device (104, 105, 107).

3. Motor vehicle seat according to claim 1 or 2, **characterised in that** the hold down member (203) slides on the ramp (146) upon approaching the memory position.

4. Motor vehicle seat according to claim 1 or 2, **characterised in that** the hold down member (203) moves on the ramp (146) by means of rollers or wheels upon approaching the memory position.

5. Motor vehicle seat according to one of the claims 1 to 4, **characterised in that** the hold down member (203) is mounted so as to be spring elastic.

6. Motor vehicle seat according to one of the claims 1 to 5, **characterised in that** the hold down member (203) is mounted so as to be longitudinally displaceable.

7. Motor vehicle seat according to one of the claims 1 to 6, **characterised in that** the hold down member (203) upon approaching the memory position with the backrest (R) in the position of use acts on the locking device (104, 107) of the memory device (104, 105, 107) so that the latter is released.

8. Motor vehicle seat according to one of the claims 1 to 7, **characterised in that** the hold down member (203) in the memory position of the seat frame engages in an indent (145') provided on the locking device (104, 107).

9. Motor vehicle seat according to one of the claims 1 to 8, **characterised in that** the ramp (146) is inclined in the seat longitudinal direction (L).

10. Motor vehicle seat according to one of the claims 1 to 9, **characterised in that** the ramp (146) is provided on a locking unit (104) of the locking device (104, 107) which can be displaced in the seat longitudinal direction (L) .

11. Motor vehicle seat according to claim 10, **characterised in that** the ramp (16) is provided on a pivotally mounted structural assembly of the locking unit (104).

12. Motor vehicle seat according to claim 11, **characterised in that** the pivotally mounted structural assembly is formed by a locking pawl (104) of the locking unit (104, 105).

13. Motor vehicle seat according to claim 11 or 12, **characterised in that** the pivotally mounted structural assembly upon approaching the memory position is pivoted more and more through the effect of the hold down member (203) whereby the locking device (104, 107) is released.

14. Motor vehicle seat according to one of the claims 11 to 13, **characterised in that** the ramp (146) extends transversely to the seat longitudinal direction (L) only over part of the width of the pivotally mounted structural assembly (104).

15. Motor vehicle seat according to claim 10 or 11, **characterised in that** the stop (147) provided on the locking device (104, 107) is arranged on the pivotable structural assembly (104).

16. Motor vehicle seat according to one of the preceding claims, **characterised in that** the stop (127) on the seat frame side is connected to the seat longitudinal guide (101, 102).

17. Motor vehicle seat according to claim 16, **characterised in that** the stop (127) on the seat frame side is formed on a holding part (201) fixed to a seat rail (102) of the rail longitudinal guide (101, 102).

18. Motor vehicle seat according to one of the preceding claims, **characterised in that** the hold down member (203) serves as an entraining element which in the memory position of the seat and with the backrest (R) in the position of use acts on the memory device (104, 105, 107) so that the memory position is adjusted together with the seat frame (G) during adjustment of the seat longitudinal position.

19. Motor vehicle seat according to claim 18, **characterised in that** the movably mounted entraining element (203) in the position of use of the backrest (R) is held by means of a locking element (221) in a position in which it acts, in the memory position of the seat, on the memory device (104, 105, 107) so that the memory position is adjusted together with the seat frame (G) when the seat longitudinal position is adjusted.

20. Motor vehicle seat according to claim 19, **characterised in that** the locking element (221) is provided on a lever (202) which comprises an actuating section (222) for releasing the fixing device (120).

21. Motor vehicle seat according to one of the preceding claims, **characterised in that** the locking device (104, 107) has a locking unit (104) which can be displaced in the seat longitudinal direction (L) and which simultaneously defines the memory position.

22. Motor vehicle seat according to claim 21, **characterised in that** a detent device (107) is assigned to the locking unit (104), said detent device (107) having in the seat longitudinal direction (L) detent points (170) arranged in succession and on which the locking unit (104) can be locked in relation to the detent device (107).

23. Motor vehicle seat according to claim 22, **characterised in that** the locking unit comprises a pivotally mounted locking pawl (104) which comprises a detent element (141) which can engage at the detent points (170) in the detent device (107).

24. Motor vehicle seat according to claim 18 or 19 and claim 23, **characterised in that** the entraining element (203) acts on the locking pawl (104) to release the locking device (104, 107).

25. Motor vehicle seat according to claim 18 or 19 and claim 23 or 24, **characterised in that** a stop (145, 145') is provided on the locking pawl (104), on which stop (145, 145') the entraining element (203) acts when the backrest (R) is in a position of use so that the locking unit (104) is entrained during adjustment of the seat longitudinal position.

26. Motor vehicle seat according to claim 25, **characterised in that** the stop (145, 145') is formed by a projection (145) or an indentation (145').

27. Motor vehicle seat according to one of the claims 23 to 26, **characterised in that** the ramp (146) is provided on the locking pawl (104).

28. Motor vehicle seat according to claim 18 and 21, **characterised in that** a stop (147) is provided on the locking unit (104) of the memory device (104, 105, 107), to which stop (147) at least one stop (127) on the seat frame side is assigned which during displacement of the seat frame (G) in the seat longitudinal direction (L) from the memory position entrains the locking unit (104) if the latter is not completely locked, even if the entraining element (203) has been lifted from the memory device (104, 105, 107), and that the stop (127, 128) on the seat frame side no longer acts on the locking unit (104) once the latter is locked.

29. Motor vehicle seat according to claim 23 and 28, **characterised in that** the stop is provided on the locking pawl (104) of the locking unit.

30. Motor vehicle seat according to claim 29, **characterised in that** the stop (147) is brought out of engagement with the at least one stop (127) on the seat frame side when the locking pawl (104) engages with its detent hook (141) in an associated detent opening (170).

31. Motor vehicle seat according to one of the claims 28 to 30, **characterised in that** the locking unit (104) is pretensioned towards the detent openings (170).

32. Motor vehicle seat according to claim 31, **characterised in that** the locking unit (104) engages in the next detent opening (170) automatically when the seat frame (G) is displaced in the seat longitudinal direction and the entraining element (203) has been lifted from the memory device (104, 105, 107).

33. Motor vehicle seat according to one of the preceding claims, **characterised in that** the longitudinal guide (101, 102) is formed by two rails (101, 120) engaging one inside the other which enclose a hollow space between them and that the structural assemblies of the memory device (104, 105, 107) are arranged within this hollow space.

34. Motor vehicle seat according to claim 33, **characterised in that** the stop (127) on the seat frame side is arranged within the hollow space formed by the two rails (101, 102).

35. Motor vehicle seat according to one of the preceding claims, **characterised in that** the backrest (R) is coupled on the one hand to the fixing device (20) and on the other hand to the locking device (104, 107) so that when the backrest (R) is folded forward towards the seat surface the current seat longitudinal position is initially locked by means of the locking device (104, 107) as a memory position and the fixing device (120) is then released.

## Revendications

1. Siège de véhicule automobile, comprenant :
- un châssis de siège (G),
- un dossier (R), monté en pivotement sur le châssis de siège (G) et capable d'être rabattu depuis sa position d'utilisation en direction d'une surface d'assise du châssis de siège (G),
- un guidage longitudinal (101, 102) au moyen duquel le châssis de siège (G) est déplaçable pour régler la position du siège dans la direction longitudinale (L),
- un dispositif d'immobilisation (120) pour arrêter le châssis de siège (G) dans une position longitudinale préalablement réglée du siège,
- un élément d'actionnement (120b) pour déverrouiller le dispositif d'immobilisation (120) de sorte que le châssis de siège (G) peut être déplacé en direction longitudinale (L),
- un mécanisme d'accouplement, qui agit sur l'élément d'actionnement (120b) et qui déverrouille le dispositif d'immobilisation (120) quand le dossier (R) est rabattu en direction de la surface d'assise,
- un système à mémoire (104, 105, 107) au moyen duquel le châssis de siège (G) peut être arrêté automatiquement, lors d'un déplacement en direction longitudinale du siège, dans une position longitudinale réglable, définie comme position "mémoire",
- un dispositif de verrouillage (104, 107) du système à mémoire (104, 105, 107) pour verrouiller une position "mémoire" réglée,
- des moyens (202, 206) au moyen desquels le dispositif de verrouillage (104, 107) est couplé au dossier (R),
- un élément de maintien vers le bas (203), monté mobile, qui agit, dans la position mémoire du siège et lorsque le dossier (R) se trouve dans la position d'utilisation, sur le système à mémoire (104, 105, 107) de telle manière que son dispositif de verrouillage (104, 107) est déverrouillé, et
- une rampe (146) au moyen de laquelle l'élément de maintien vers le bas (203) vient en coopération, lors de l'approche de la position mémoire, avec le dossier (R) qui se trouve dans la position d'utilisation, et celui-ci est guidé jusque dans une position dans laquelle il agit sur le dispositif de verrouillage (104, 107) de telle manière que celui-ci est déverrouillé,
**caractérisé en ce que**
sur le dispositif de verrouillage (104, 107) est prévue une butée (147) qui, lors de l'approche de la position mémoire, coopère avec une butée (127) du côté du châssis de siège de telle façon qu'un déverrouillage du dispositif de verrouillage (104, 107) est bloqué jusqu'à ce que le châssis de siège (G) atteigne la position mémoire.

2. Siège de véhicule automobile selon la revendication 1, **caractérisé en ce que** la rampe (146) est prévue sur le système à mémoire (104, 105, 107).

3. Siège de véhicule automobile selon la revendication 1 ou 2, **caractérisé en ce que** l'élément de maintien vers le bas (203) coulisse sur la rampe (146) lors de l'approche de la position mémoire.

4. Siège de véhicule automobile selon la revendication 1 ou 2, **caractérisé en ce que** l'élément de maintien vers le bas (203) se déplace sur la rampe (146) au moyen de galets ou de roulettes lors de l'approche de la position mémoire.

5. Siège de véhicule automobile selon l'une des revendications 1 à 4, **caractérisé en ce que** l'élément de maintien vers le bas (203) est monté avec effet élastique.

6. Siège de véhicule automobile selon l'une des revendications 1 à 5, **caractérisé en ce que** l'élément de maintien vers le bas (203) est monté avec possibilité de translation longitudinale.

7. Siège de véhicule automobile selon l'une des revendications 1 à 6, **caractérisé en ce que**, lors de l'approche de la position mémoire et lorsque le dossier (R) se trouve dans la position d'utilisation, l'élément de maintien vers le bas (203) agit sur le dispositif de verrouillage (104, 107) du système à mémoire (104, 105, 107) de telle façon que celui-ci est déverrouillé.

8. Siège de véhicule automobile selon l'une des revendications 1 à 7, **caractérisé en ce que**, dans la position mémoire du châssis de siège, l'élément de maintien vers le bas (203) s'engage dans un creux (145') prévu sur le dispositif de verrouillage (104, 107).

9. Siège de véhicule automobile selon l'une des revendications 1 à 8, **caractérisé en ce que** la rampe (146) s'étend de façon inclinée en direction longitudinale (L) du siège.

10. Siège de véhicule automobile selon l'une des revendications 1 à 9, **caractérisé en ce que** la rampe (146) est prévue sur une unité de verrouillage (104), du dispositif de verrouillage (104, 107), déplaçable en direction longitudinale (L) du siège.

11. Siège de véhicule automobile selon la revendication 10, **caractérisé en ce que** la rampe (146) est prévue sur un groupe structurel, monté en pivotement, de l'unité de verrouillage (104).

12. Siège de véhicule automobile selon la revendication 11, **caractérisé en ce que** le groupe structurel monté en pivotement est formé par un loquet de blocage (104) de l'unité de verrouillage (104, 105).

13. Siège de véhicule automobile selon la revendication 11 ou 12, **caractérisé en ce que** le groupe structurel monté en pivotement est pivoté, lors de l'approche de la position mémoire, sous l'action de l'élément de maintien vers le bas (203), progressivement, et le dispositif de verrouillage (104, 107) est déverrouillé.

14. Siège de véhicule automobile selon l'une des revendications 11 à 13, **caractérisé en ce que** la rampe (146) s'étend transversalement à la direction longitudinale (L) du siège, seulement sur une partie de la largeur du groupe structurel (104) monté en pivotement.

15. Siège de véhicule automobile selon la revendication 10 ou 11, **caractérisé en ce que** la butée (147) prévue sur le dispositif de verrouillage (104, 107) est agencée sur le groupe structurel pivotant (104).

16. Siège de véhicule automobile selon l'une des revendications précédentes, **caractérisé en ce que** la butée (127) côté châssis est reliée au guidage longitudinal (101, 102) du siège.

17. Siège de véhicule automobile selon la revendication 16, **caractérisé en ce que** la butée (127) côté châssis est réalisée sur une partie de maintien (201) fixée sur un rail (102) du guidage longitudinal (101, 102) du siège.

18. Siège de véhicule automobile selon l'une des revendications précédentes, **caractérisé en ce que** l'élément de maintien vers le bas (203) sert d'élément d'entraînement qui agit, dans la position mémoire du siège et lorsque le dossier (R) se trouve dans la position d'utilisation, sur le système à mémoire (104, 105, 107) de telle façon que la position mémoire est déplacée conjointement avec le châssis de siège (G) lors d'un réglage de la position longitudinale du siège.

19. Siège de véhicule automobile selon la revendication 18, **caractérisé en ce que** l'élément d'entraînement monté mobile (203) est maintenu, lorsque le dossier (R) se trouve en position d'utilisation, au moyen d'un élément de blocage (221) dans une position dans laquelle il agit, dans la position mémoire du siège, sur le système à mémoire (104, 105, 107) de telle façon que la position mémoire est déplacée conjointement avec le châssis de siège (G) lors d'un réglage de la position longitudinale du siège.

20. Siège de véhicule automobile selon la revendication 19, **caractérisé en ce que** l'élément de blocage (221) est prévu sur un levier (202) qui comporte un tronçon d'actionnement (222) pour déverrouiller le dispositif d'immobilisation (120).

21. Siège de véhicule automobile selon l'une des revendications précédentes, **caractérisé en ce que** le dispositif de verrouillage (104, 107) comprend une unité de verrouillage (104) déplaçable en direction longitudinale (L) du siège, qui définit simultanément la position mémoire.

22. Siège de véhicule automobile selon la revendication 21, **caractérisé en ce qu'**à l'unité de verrouillage (104) est associé un moyen d'enclenchement (107) qui comporte des points d'enclenchement (170) agencés les uns derrière les autres dans la direction longitudinale (L) du siège, et au niveau desquels l'unité de verrouillage (104) est susceptible d'être verrouillée par rapport au moyen d'enclenchement (107).

23. Siège de véhicule automobile selon la revendication 22, **caractérisé en ce que** l'unité de verrouillage comprend un loquet de blocage (104) monté en pivotement, qui comprend un élément d'enclenchement (141), lequel est susceptible de s'enclencher dans le moyen d'enclenchement (107) au niveau des points d'enclenchement (170).

24. Siège de véhicule automobile selon la revendication 18 ou 19 et à revendication 23, **caractérisé en ce que** l'élément d'entraînement (203) pour le déverrouillage du dispositif de verrouillage (104, 107) agit sur le loquet de blocage (104).

25. Siège de véhicule automobile selon la revendication 18 ou 19 et la revendication 23 ou 24, **caractérisé en ce que** sur le loquet de blocage (104) est prévue une butée (145,145'), sur laquelle agit l'élément d'entraînement (203) quand le dossier (R) se trouve dans une position d'utilisation, de sorte que l'unité de verrouillage (104) est conjointement entraînée lors d'un réglage de à position longitudinale du siège.

26. Siège de véhicule automobile selon la revendication 25, **caractérisé en ce que** la butée (145, 145') est formée par une saillie (145) ou par un creux (145').

27. Siège de véhicule automobile selon l'une des revendications 23 à 26, **caractérisé en ce que** la rampe (146) est prévue sur le loquet de blocage (104).

28. Siège de véhicule automobile selon la revendication 18 et 21, **caractérisé en ce que**, sur l'unité de verrouillage (104) du système à mémoire (104, 105, 107) est prévue une butée à laquelle est associée au moins une butée (127) côté châssis, laquelle entraîne l'unité de verrouillage (104), lors d'un déplacement du châssis de siège (G) en direction longitudinale (L) du siège en partant de la position mémoire, quand cette unité n'est pas totalement verrouillée, même quand l'élément d'entraînement (203) est soulevé par le système à mémoire (104, 105, 107), et **en ce que** la butée côté châssis (127, 128) n'agit plus sur l'unité de verrouillage (104) dès que celle-ci est verrouillée.

29. Siège de véhicule automobile selon la revendication 23 et 28, **caractérisé en ce que** la butée est prévue sur le loquet de blocage (104) de l'unité de verrouillage.

30. Siège de véhicule automobile selon la revendication 29, **caractérisé en ce que** la butée (147) est amenée hors d'engagement avec ladite au moins une butée (127) côté châssis quand le loquet de blocage (104) s'enclenche avec son crochet d'enclenchement (141) dans une ouverture d'enclenchement associé (170).

31. Siège de véhicule automobile selon l'une des revendications 28 à 30, **caractérisé en ce que** l'unité de verrouillage (104) est précontrainte en direction des ouvertures d'enclenchement (170).

32. Siège de véhicule automobile selon la revendication 31, **caractérisé en ce que** l'unité de verrouillages (104) s'enclenche automatiquement dans l'ouverture d'enclenchement (170) situé à la suite quand le châssis de siège (G) est déplacé en direction longitudinale du siège et que l'élément d'entraînement (123) est soulevé par le système à mémoire (104, 105, 107).

33. Siège de véhicule automobile selon l'une des revendications précédentes, **caractérisé en ce que** le guidage longitudinal (101, 102) est formé par deux rails (101, 102) engagés l'un dans l'autre, qui enferment entre eux une cavité, et **en ce que** les groupes structurels du système à mémoire (104, 105, 107) sont agencés à l'intérieur de cette cavité.

34. Siège de véhicule automobile selon la revendication 33, **caractérisé en ce que** la butée (127) côté châssis est agencée à l'intérieur de la cavité formée par les deux rails (101, 102).

35. Siège de véhicule automobile selon l'une des revendications précédentes, **caractérisé en ce que** le dossier (R) est couplé au dispositif d'immobilisation (20) d'une part et au dispositif de verrouillage (104, 107) d'autre part de telle façon que lors d'un rabattement du dossier (R) en direction de la surface d'assise, la position longitudinale actuelle du siège est tout d'abord verrouillée à titre de position mémoire au moyen du dispositif de verrouillage, et le dispositif d'immobilisation (120) est ensuite déverrouillé.
